# EUROPÄISCHE PATENTSCHRIFT

(11) **EP 2 247 701 B1**
(45) Veröffentlichungstag und Bekanntmachung des Hinweises auf die Patenterteilung: **18.06.2014**
(21) Anmeldenummer: 09707002.3
(22) Anmeldetag: 26.01.2009
(51) Int. Cl.: C10M 173/02, C10M 111/04, C10N 50/08, C10N 40/24

(54) **VERFAHREN ZUR BESCHICHTUNG VON METALLISCHEN OBERFLÄCHEN MIT EINER WACHSE ENTHALTENDEN SCHMIERSTOFFZUSAMMENSETZUNG**
METHOD FOR COATING METALLIC SURFACES WITH A WAX-CONTAINING LUBRICANT COMPOSITION
PROCÉDÉ D'ENDUCTION DE SURFACES MÉTALLIQUES AVEC UNE COMPOSITION DE LUBRIFIANT CONTENANT DES CIRES

(30) Priorität: 30.01.2008 DE 102008000186
(43) Veröffentlichungstag der Anmeldung: 10.11.2010
(73) Patentinhaber: Chemetall GmbH, 60487 Frankfurt (DE)
(72) Erfinder: RAU, Uwe, 60322 Frankfurt (DE); NITTEL, Klaus-Dieter, 60431 Frankfurt (DE)
(74) Vertreter: Hübner, Günter
(86) Internationale Anmeldenummer: PCT/EP2009/050852
(87) Internationale Veröffentlichungsnummer: WO 2009/095374

(56) Entgegenhaltungen:
- EP-A- 0 711 821
- US-A1- 2004 101 697
- US-A1- 2006 003 901

## Beschreibung

Die Erfindung betrifft ein Verfahren zur Beschichtung von metallischen Oberflächen zuerst mit einer wässerigen sauren Phosphatierungslösung und danach mit einer Schmierstoffzusammensetzung in Form einer wässerigen Lösung oder Dispersion auf Basis von polymerem organischen Material mit einem Gehalt an mindestens einem organischen polymeren Material aus lonomer, weiterem Polymer/Copolymer oder/und deren Derivaten sowie gegebenenfalls von mindestens einem Wachs, von mindestens einem wasserlöslichen, wasserhaltigen oder/und wasserbindenden Oxid oder/und Silicat, von mindestens einem Festschmierstoff, von mindestens einem Reibwertminderer oder/und von mindestens einem weiteren Additiv sowie eine entsprechende Schmierstoffzusammensetzung, die nach der Ausbildung eines Überzugs auf einem metallischen Formkörper insbesondere der Erleichterung der Kaltumformung dieses Formkörpers dienen soll. Eine Kaltumformung kann üblicherweise bei Oberflächentemperaturen von bis zu etwa 450 °C aber ohne Wärmezufuhr erfolgen. Die Erwärmung tritt dabei nur durch die Umformung und gegebenenfalls die Vorwärmung der umzuformenden Werkstücke ein. Üblicherweise liegt jedoch die Temperatur der umzuformenden Werkstücke bei ca. 20 °C. Falls jedoch die umzuformenden Werkstücke auf Temperaturen im Bereich von 650 bis 850 °C oder von 900 bis 1.250 °C vorab aufgeheizt werden, spricht man von Halbwarm- oder Warmumformung.

Während zum Kaltumformen von metallischen Formkörpern bei geringeren Umformgraden und entsprechend geringeren Kräften üblicherweise Umformöle genutzt werden, werden bei weitaus höheren Umformgraden in der Regel mindestens eine Beschichtung als Trennschicht zwischen Werkstück und Werkzeug verwendet, um Kaltverschweißung von Werkstück und Werkzeug zu vermeiden. Für letztere ist es üblich, die Werkstücke mit mindestens einer Beschichtung eines Schmiermittels oder mit einer Schmierstoffzusammensetzung zu versehen, um den Reibungswiderstand zwischen der Werkstückoberfläche und dem Umformwerkzeug zu verringern. Die Kaltumformung umfasst:
Ein Gleitziehen (Zugdruckumformung) z.B. von geschweißten oder nahtlosen Rohren, Hohlprofilen, Stäben, Vollprofilen oder Drähten,
ein Abstreckziehen oder/und Tiefziehen z.B. von Bändern, Blechen oder Hohlkörpern zu Hohlkörpern,
ein Kaltfließpressen (Druckumformen) z.B. von Hohl- oder Vollkörpern oder/und
ein Kaltstauchen z.B. von Drahtabschnitten zu Verbindungselementen wie z.B. Muttern- oder Schrauben-Rohlingen.

Früher wurden die metallischen Formkörper zur Kaltumformung fast nur entweder durch Auftragen von einem Fett, von einem Öl oder von einer Ölemulsion oder zuerst durch Beschichten mit Zinkphosphat und danach durch Beschichten entweder mit einer Seife insbesondere auf Basis von Alkali- oder Erdalkalistearat oder/und mit einem Festschmierstoff insbesondere auf Basis von Molybdänsulfid, Wolframsulfid oder/und Kohlenstoff vorbereitet. Eine Seife enthaltende Beschichtung findet jedoch bei mittleren Kräften und bei mittelhohen Temperaturen ihre obere Einsatzgrenze. Ein Festschmierstoff wurde nur verwendet, wenn es sich um mittelschwere oder schwere Kaltumformungen handelte. Bei der Kaltumformung von Edelstählen wurden oft Beschichtungen aus Chlorparaffinen eingesetzt, die heute aus Gründen des Umweltschutzes ungern verwendet werden. Doch Sulfid-haltige Beschichtungen beeinträchtigen Edelstahl.

Danach wurde vereinzelt begonnen, zuerst mit Zinkphosphat und danach entweder mit Öl oder mit einer bestimmten organisch-polymeren Zusammensetzung zu beschichten. Bei Bedarf wurde entweder der organisch-polymeren Zusammensetzung mindestens ein Festschmierstoff wie z.B. Molybdändisulfid oder/und Graphit zugesetzt (zweite Beschichtung, wobei Zinkphosphat als erste Beschichtung gewählt wurde) oder dieser mindestens eine Festschmierstoff wurde als dritte Beschichtung auf der organischpolymeren Beschichtung aufgebracht. Während Molybdändisulfid bis zu Temperaturen von etwa 450 °C eingesetzt werden kann, kann Graphit bis zu Temperaturen von etwa 1100 °C verwendet werden, wobei jedoch seine Schmierwirkung etwa erst bei 600 °C beginnt. Diese Beschichtungsabfolgen sind bis heute üblich.

DE-A-44 45 993 beschreibt ein Schmiermittelkonzentrat für die Kaltumformung mit einem Gehalt an Polyethylen, Polyacrylsäure und Styrol/Acrylsäure-Copolymer von bestimmten Eigenschaften sowie das entsprechende Verfahren zum Aufbringen des Schmiermktelüberzugs. Wachse werden nicht ausdrücklich angeführt. Dieses Schmiermittelsystem hat jedoch den Nachteil, dass die Viskosität bei hoher Temperatur relativ stark abfällt und dass es auch schon bei mittelschweren Umformungen zusätzlich einen Festschmierstoff wie z.B. Molybdändisulfid oder/und Graphit erfordert. Die sulfidischen Festschmierstoffe sind insbesondere bei hoher Temperatur notwendig. Sie haben aber den Nachteil, dass die Sulfide nicht hydrolysestabil sind und leicht in schwefelige Säure überführt werden. Die schwefelige Säure kann leicht Korrosion verursachen, wenn die Beschichtung nicht gleich nach der Kaltumformung vom Werkstück entfernt wird.

EP 0 711 821 A1 betrifft Zusammensetzungen als Schmiermittelträgersalze mit einem Gehalt an Bor-Verbindungen und Verbindungen an Di- oder Tricarbonsäuren oder/und deren Derivaten. US 2006/003901 A1 beschreibt eine Zusammensetzung auf der Basis zweier deutlich unterschiedlicher Acryl-haltlger Copolomyere, Wachs und Partikeln als Dry Film Lubricant. US 2004/0101697 A1 lehrt organische Dünnfilme auf feuerverzinkten Stahlblechen von hervorragender Korrosiorisbeständigkeit. EP 1 454 865 A1 betrifft Beschichtungen zum Schutz metallischer Oberflächen auf Basis von Alkalisilicat, Gleitmittel und Verdickungsmittel.

Die vorgenannten Schmiermittelsysteme erfüllen nicht die inzwischen deutlich weiter angestiegenen Anforderungen an den Umformgrad, an die Auspressgenauigkeit (net-shape) und die Umformgeschwindigkeit. Außerdem sind die Umweltverträglichkeit und die Arbeitsplatzhygiene zu berücksichtigen. Weiterhin sollen sich die überschüssigen Schmiermittelreste nicht an einer Stelle am Werkzeug ablagern. Denn das beeinflusst die Auspressgenauigkeit der Werkstücke und erhöht den Ausschuss. Es ist vorteilhaft, wenn der Überzug und die Ablagerungen nach der Umformung leicht vom Werkstück, vom Werkzeug und aus der Anlage entfernt werden können.

Es bestand daher die Aufgabe, ein alternatives Beschichtungsverfahren vorzuschlagen, das einen möglichst umweltfreundlichen Überzug auf einfache und kostengünstige Weise auf metallischen Werkstücken insbesondere aus Stahl ermöglicht und in manchen Ausführungsformen bei Bedarf für mittelschwere oder/und besonders schwere Kaltumformungen geeignet ist. In einer weiteren Aufgabe soll der Überzug bei Bedarf nach der Kaltumformung vom umgeformten Werkstück auf einfache Weise entfernt werden können.

Die Aufgabe wird gelöst mit einem Verfahren zur Vorbereitung von metallischen Werkstücken zum Kaltumformen durch Aufbringen einer Schmierstoffschicht, die im Folgenden auch als Überzug bezeichnet wird, entweder auf eine metallische Oberfläche oder auf eine vorbeschichtete metallische Oberfläche, dadurch gekennzeichnet, dass die Schmierstoffschicht durch Kontaktieren der Oberflächen mit einer wässerigen Schmierstoffzusammensetzung ausgebildet wird,
die einen Gesamtgehalt an mindestens zwei Wachsen im Bereich von 5 bis 60 Gew.-% der Fest- und Wirkstoffe aufweist,
dass der aus der Schmierstoffzusammensetzung gebildete Überzug über einen größeren Temperaturbereich, der durch das Kaltumformen beim Aufheizen des metallischen Werkstücks durchlaufen wird, mehrere aufeinander folgende Erweichungsbereiche/Erweichungspunkte oder/und Schmelzbereiche/Schmelzpunkte aufweist, so dass sich eine im Wesentlichen kontinuierliche Änderung oder eine näherungsweise abgestufte Änderung der thermischen oder/und mechanischen Eigenschaften oder/und der Viskosität der Überzüge beim Kaltumformen ergibt, wobei mindestens ein niedrig-schmelzendes Wachs mit mindestens einem hoch-schmelzenden Wachs in der Schmierstoffzusammensetzung oder/und im hieraus gebildeten Überzug enthalten sind, deren Schmelzbereiche/Schmelzpunkte Tₘ mindestens 30 °C auseinander liegen, und wobei die aus den Schmierstoffzusammensetzungen gebildeten Überzüge mit einem Gehalt an mindestens zwei Wachsen über den Temperaturbereich von 40 bis 260 °C insgesamt mindestens zwei Bereiche oder/und Peaks des Schmelzens aufweisen, von denen mindestens zwei mindestens 30 °C auseinander liegen, und
dass die wässerige Schmierstoffzusammensetzung außerdem einen Gehalt an organischem polymeren Material auf Basis von lonomer, Acrylsäure/Methacrylsäure, Epoxid, Ethylen, Polyamid, Propylen, Styrol, Urethan, deren Ester(n) oder/und deren Salz(en) sowie einen Gehalt an wasserlöslichem, wasserhaltigem oder/und wasserbindendem Oxid oder/und Silicat ausgewählt aus jeweils mindestens einem Wasserglas, im Bereich von 0,1 bis 85 Gew.-% enthält, wobei der Gehalt an mindestens einem lonomere im Bereich von 5 bis 90 Gew.-% liegt, jeweils bezogen auf Fest- und Wirkstoffe.

Überraschend wurde festgestellt, dass bei einem Gehalt an mindestens zwei Wachsen mit deutlich unterschiedlichen Eigenschaften in der Schmierstoffzusammensetzung oder/und im hieraus gebildeten Überzug das Kaltumformen in etlichen Ausführungsformen deutlich vereinfacht wird gegenüber dem Gehalt an nur einem Wachs, so dass bei ansonsten vergleichbaren Bedingungen auch eine schwerere Kaltumformung als bisher durchgeführt werden konnte. Dadurch konnten mit der im Wesentlichen gleichen Schmierstoffzusammensetzung oder/und dem hieraus gebildeten Überzug auch andere Arten der Kaltumformung, bei denen höhere Geschwindigkeiten des Umformens, höhere Kräfte oder/und höhere Temperaturen auftreten, erfolgreich durchgeführt werden. In den erfindungsgemäßen Schmierstoffzusammensetzungen oder/und den hieraus gebildeten Überzügen werden Wachse eingesetzt, deren Schmelzbereiche/Schmelzpunkte Tₘ mindestens um 30 °C auseinander liegen, vorzugsweise jeweils um mindestens 40, 50, 60, 70 oder 80 °C, oder/und deren Viskositäten bei einer bestimmten erhöhten oder hohen Temperatur im Bereich der Oberflächen-Temperaturen des umzuformenden Werkstücks beim Kaltumformen um mindestens 5 % oder um mindestens 8 % in ihrer Viskosität unterschiedlich sind. Auch das Abdampfverhalten zweier Wachse mit ähnlichem Schmelzbereich/Schmelzpunkt kann deutlich unterschiedlich sein.

Das erfindungsgemäße Verfahren dient insbesondere der Erleichterung, Verbesserung oder/und Vereinfachung der Kaltumformung von metallischen Formkörpern.

Der Begriff "Schmierstoffzusammensetzung" kennzeichnet die Stadien von der wässerigen über die eintrocknende bis zur trockenen Schmierstoffzusammensetzung als chemische Zusammensetzung, Phasen betreffende Zusammensetzung und die Masse betreffende Zusammensetzung, während der Begriff "Überzug" die trockene, aufgeheizte, erweichende oder/und schmelzende Beschichtung, die aus der Schmierstoffzusammensetzung ausgebildet wird oder/und ausgebildet wurde, einschließlich seiner chemischen Zusammensetzung, Phasen betreffenden Zusammensetzung und die Masse betreffenden Zusammensetzung bezeichnet. Die wässerige Schmierstoffzusammensetzung kann eine Dispersion oder Lösung, insbesondere eine Lösung, kolloidale Lösung, Emulsion oder/und Suspension, sein. Sie weist üblicherweise einen pH-Wert im Bereich von 7 bis 14 auf, insbesondere von 7,5 bis 12,5 oder von 8 bis 11,5, besonders bevorzugt von 8,5 bis 10,5 oder von 9 bis 10.

Die Schmierstoffzusammensetzung oder/und der hieraus gebildete Überzug enthalten einen Gehalt an mindestens einem wasserlöslichen, wasserhaltigen oder/und wasserbindenden Oxid oder/und Silicat ausgewählt aus mindestens einem Wasserglas sowie einen Gehalt an mindestens einem Ionomer, mindestens einem Nichtlonomer oder/und mindestens zwei Wachsen sowie gegebenenfalls einen Gehalt an mindestens einem Additiv. Besonders bevorzugt enthält sie in manchen Ausführungsformen zusätzlich jeweils mindestens einen Gehalt an Acrylsäure/Methacrylsäure oder/und Styrol insbesondere als Polymer(e) oder/und als Copolymer(e), das/die keine lonomer(e) ist/sind. Vorzugsweise enthält/enthalten die Schmierstoffzusammensetzung oder/und der hieraus gebildete Überzug jeweils einen Gehalt an mindestens 5 Gew.-% an jeweils mindestens einem Ionomer oder/und Nicht-Ionomer.

Vorzugsweise besteht das organische polymere Material im Wesentlichen aus Monomeren, Oligomeren, Cooligomeren, Polymeren oder/und Copolymeren auf Basis von lonomer, Acrylsäure/Methacrylsäure, Epoxid, Ethylen, Polyamin, Propylen, Styrol, Urethan, deren Ester(n) oder/und deren Salz(en). Der Begriff "Ionomer" schließt hierbei einen Gehalt an freien oder/und assoziierten Ionen ein.

### Oxide oder/und Silicate:

Überraschend wurde festgestellt, dass bereits bei einem sehr geringen Zusatz von wasserlöslichem, wasserhaltigem oder/und wasserbindendem Oxid oder/und Silicat wie z.B. Wasserglas zu einer im Wesentlichen organischen polymeren Zusammensetzung in etlichen Ausführungsformen eine deutliche Verbesserung der Kaltumformung unter ansonsten gleichen Bedingungen erzielt wird und stärker umgeformt werden kann als bei vergleichbaren, von diesen Verbindungen freien Schmierstoffzusammensetzungen. Andererseits zeigte sich, dass auch Werkstücke mit einem Überzug mit einem sehr hohen Gehalt an wasserlöslichem, wasserhaltigem oder/und wasserbindendem Oxid oder/und Silicat in einer ansonsten im Wesentlichen organischen polymeren Zusammensetzung ebenfalls sehr vorteilhaft umgeformt werden kann. Für manche Ausführungsformen hat sich dabei ein Optimum eher im unteren oder/und mittleren Zusammensetzungsbereich ergeben.

Bei Versuchen über ein breiteres Produktspektrum wurde festgestellt, dass mit den erfindungsgemäßen Schmierstoffzusammensetzungen oder/und Überzügen in einem weitaus höheren Ausmaß als bisher einerseits auf eine zusätzliche Festschmierstoffschicht auf Basis von sulfidischem Schmierstoff wie z.B. aus Molybdändisulfid, andererseits auf eine dritte Beschichtung auf Basis von sulfidischem Festschmierstoff verzichtet werden kann. Im ersten Fall ist diese Feststoffschmierschicht die zweite Beschichtung, im zweiten Fall die dritte Beschichtung, die einer Zinkphosphatschicht als erster Beschichtung folgt. Die Möglichkeit, teilweise auf den Einsatz von Festschmierstoff zu verzichten, stellt nicht nur eine spürbare Arbeits- und Kosteneinsparung und Vereinfachung dar, sondern spart auch mindestens eine teure, umweltunfreundliche, stark schwarz färbende und bezüglich der Verschmutzung und Korrosionsempfindlichkeit störende Substanz ein.

Während dieses Produktspektrum früher zu etwa 60 % des Produktspektrums mit Seife und bei den restlichen etwa 40 % des Produktspektrums mit Molybdändisulfid und gegebenenfalls mit Graphit als jeweils zweiter Schicht nach einer Zinkphosphatschicht beschichtet worden wäre, würde dieses Produktspektrum heute eher zuerst mit einer Zinkphosphatschicht, danach mit einer konventionellen organisch-polymeren Schmierstoffzusammensetzung und gegebenenfalls zusätzlich bei Bedarf mit einer dritten Beschichtung auf Basis von sulfidischem Festschmierstoff und gegebenenfalls zusätzlich von Graphit beschichtet werden. Sulfidischer Festschmierstoff war bei allen mittelschweren und schweren Kaltumformungen notwendig. Da die Seifenschicht keine präzisen Kaltumformungen - das heißt keine hohe Auspreßgenauigkeit der umgeformten Werkstücke - ermöglichte, hatte sich die organisch-polymere Schmierstoffzusammensetzung, die deutlich hochwertiger als die Seifenbeschichtung ist, trotz der höheren Kosten vereinzelt eingeführt. Sie war jedoch frei von wasserlöslichen, wasserhaltigen oder/und wasserbindenden Oxiden oder/und Silicaten. Bei dieser Verfahrensabfolge wäre etwa zu 40 % des Produktspektrums die zusätzliche dritte Beschichtung erforderlich. Bei Verwendung einer Zinkphosphatschicht als erster Beschichtung und der erfindungsgemäßen Schmierstoffzusammensetzung als zweiter Beschichtung ist eine zusätzliche dritte Beschichtung auf Basis von sulfidischem Festschmierstoff jetzt nur noch bei 12 bis 20 % des Produktspektrums erforderlich.

Das wasserlösliche, wasserhaltige oder/und wasserbindende Oxid oder/und Silicat ist jeweils mindestens ein Wasserglas, sein, insbesondere ein Lithium-, Natrium- oder/und Kalium-haltiges Wasserglas. Vorzugsweise ist an das wasserlösliche, wasserhaltige oder/und wasserbindende Oxid oder/und Silicat ein Gehalt von Wasser im Bereich von 5 bis 85 Gew.-% bezogen auf den Gehalt an Feststoff gebunden oder/und gekoppelt, vorzugsweise im Bereich von 10 bis 75, von 15 bis 70, von 20 bis 65, von 30 bis 60 oder von 40 bis 50 Gew.-%, wobei der typische Wassergehalt je nach Art des Oxids oder/und Silicats deutlich unterschiedliche Wassergehalte aufweisen kann. Das Wasser kann beispielsweise aufgrund der Löslichkeit, Adsorption, Benetzung, chemischen Bindung, Porosität, komplexen Partikelform, komplexen Aggregatform oder/und Zwischenschichten an den Feststoff gebunden oder/und gekoppelt sein. Diese an Wasser gebundenen oder/und gekoppelten Substanzen wirken offenbar in der Schmierstoffzusammensetzung oder/und im Überzug ähnlich wie eine Gleitschicht. Es kann auch ein Gemisch aus zwei oder aus mindestens drei Substanzen dieser Gruppe eingesetzt werden. Neben oder anstelle von Natrium oder/und Kalium können andere Kationen enthalten sein, insbesondere Ammonium-Ionen, andere Alkali-lonen als Natrium- oder/und Kalium-lonen, Erdalkali-Ionen oder/und Übergangsmetall-lonen. Die Ionen können zumindest teilweise ausgetauscht worden sein oder werden. Das Wasser des wasserlöslichen, wasserhaltigen oder/und wasserbindenden Oxids oder/und Silicats kann jeweils zumindest teilweise als Kristallwasser, als Lösemittel, adsorbiert, an Porenraum gebunden, in einer Dispersion, in einer Emulsion, in einem Gel oder/und in einem Sol vorliegen. Besonders bevorzugt ist mindestens ein Wasserglas, insbesondere ein Natrium-haltiges Wasserglas. Bevorzugt liegt dieses jeweils mindestens eine Oxid oder/und Silicat in gelöster Form, in nanokristalliner Form, als Gel oder/und als Sol vor. Gegebenenfalls kann eine Lösung auch als kolloidale Lösung vorliegen. Falls das wasserlösliche, wasserhaltige oder/und wasserbindende Oxid oder/und Silicat in partikulärer Form vorliegt, liegt es vorzugsweise sehr feinkörnig vor, insbesondere mit einer mittleren Partikelgröße unter 0,5 µm, unter 0,1 oder sogar unter 0,03 µm, jeweils bestimmt mit einem Laser-Partikelmessgerät oder/und Nanopartikel-Messgerät.

Die wasserlöslichen, wasserhaltigen oder/und wasserbindenden Oxide oder/und Silicate helfen in vielen Ausführungsformen bei der Steigerung der Viskosität des getrockneten, erweichenden und schmelzenden Überzugs und wirken vielfach als Bindemittel, als Hydrophobierungsmittel und als Korrosionsschutzmittel. Es hat sich gezeigt, dass sich unter den wasserlöslichen, wasserhaltigen oder/und wasserbindenden Oxiden oder/und Silicaten Wasserglas besonders günstig verhält. Durch den Zusatz von beispielsweise 2 bis 5 Gew.-% Wasserglas - bezogen auf Fest- und Wirkstoffe - zu der wässerigen Schmierstoffzusammensetzung wird die Viskosität des getrockneten, erweichenden und schmelzenden Überzugs in vielen Ausführungsformen insbesonders bei Temperaturen von mehr als 230 °C deutlich angehoben im Vergleich zu einer Schmierstoffzusammensetzung auf der gleichen chemischen Basis, jedoch ohne dem Wasserglas-Zusatz. Hierdurch wird eine höhere mechanische Beanspruchung beim Kaltumformen ermöglicht. Hierdurch wurde es auch bei vielen Zusammensetzungen und Anwendungsfällen erst möglich, ein Kaltfließpressen anzuwenden, das ohne diesen Zusatz nicht anwendbar war. Die Werkzeugabnutzung und die Zahl der Werkzeugwechsel lassen sich dadurch drastisch verringern. Die Herstellkosten werden hierdurch ebenfalls deutlich verringert.

Es hat sich gezeigt, dass das Werkzeug mit zunehmendem Wasserglas-Anteil in der Schmierstoffzusammensetzung bei ansonsten gleichen Arbeitsbedingungen und gleicher Grundzusammensetzung sauberer und blanker wird. Andererseits war es auch möglich, den Gehalt an Wasserglas in der Schmierstoffzusammensetzung auf bis zu etwa 85 Gew.-% der Fest- und Wirkstoffe anzuheben und immer noch gute bis sehr gute Ergebnisse zu erzielen. Bei Gehalten von mehr als 80 Gew.-% der Fest- und Wirkstoffe nimmt der Verschleiß deutlich zu. Ein Optimum liegt offenbar irgendwo im unteren oder/und mittleren Gehaltsbereich, da bei sehr hohen Gehalten auch der Werkzeugverschleiß wieder langsam zunimmt. Bei einem Zusatz auf Basis von Titandioxid oder Titanoxidsulfat wurde ein etwas stärkerer Verschleiß als bei einem Wasserglas-Zusatz festgestellt, obwohl sich der Zusatz grundsätzlich bewährt hat. Auch ein Disilicat-Zusatz hat sich als vorteilhaft gezeigt.

Der Gehalt an wasserlöslichen, wasserhaltigen oder/und wasserbindenden Oxiden oder/und Silicaten in der Schmierstoffzusammensetzung oder/und im hieraus gebildeten Überzug beträgt 0,1 bis 85, vorzugsweise 0,3 bis 80 oder 0,5 bis 75 Gew.-% der Fest- und Wirkstoffe, besonders bevorzugt 1 bis 72, 5 bis 70, 10 bis 68, 15 bis 65, 20 bis 62, 25 bis 60, 30 bis 58, 35 bis 55 oder 40 bis 52 Gew.% der Fest- und Wirkstoffe, bestimmt ohne den hieran gebundenen oder/und gekoppelten Wassergehalt. Das Gewichtsverhältnis der Gehalte an wasserlöslichen, wasserhaltigen oder/und wasserbindenden Oxiden oder/und Silicaten zum Gehalt an lonomer(en) oder/und Nicht-Ionomer(en) liegt in der Schmierstoffzusammensetzung oder/und im Überzug vorzugsweise im Bereich von 0,001 : 1 bis 0,2 : 1, besonders bevorzugt im Bereich von 0,003 : 1 bis 0,15 : 1, von 0,006 : 1 bis 0,1 : 1 oder von 0,01 : 1 bis 0,02 : 1.

### Ionomere:

Die Ionomere stellen eine besondere Art von Polyelektrolyten dar. Sie bestehen vorzugsweise im Wesentlichen aus ionomeren Copolymeren gegebenenfalls zusammen mit entsprechenden Ionen, Monomeren, Comonomeren, Oligomeren, Cooligomeren, Polymeren, deren Estern oder/und deren Salzen. Blockcopolymere und Pfropfcopolymere werden als Untergruppe der Copolymere angesehen. Vorzugsweise sind die lonomere Verbindungen auf Basis von Acrylsäure/Methacrylsäure, Ethylen, Propylen, Styrol, deren Ester(n) oder/und deren Salz(en) oder Gemische mit mindestens einer dieser ionomeren Verbindungen. Die Schmierstoffzusammensetzung oder/und der hieraus gebildete Überzug haben einen Gehalt an mindestens einem Ionomer im Bereich von 5 bis 90 Gew.-% der Fest- und Wirkstoffe, Vorzugsweise beträgt der Gehalt an mindestens einem Ionomer von 10 bis 90, 15 bis 85, 20 bis 80, 25 bis 75, 30 bis 70, 35 bis 65, 40 bis 60 oder 45 bis 55 Gew.-% der Fest- und Wirkstoffe der Schmierstoffzusammensetzung oder/und des hieraus gebildeten Überzugs. Je nach dem gewünschten Eigenschaftsspektrum und der Anwendung bestimmter umzuformender Werkstücke und Kaltumformvorgänge kann die Zusammensetzung der Schmierstoffzusammensetzung oder/und des hieraus gebildeten Überzugs unterschiedlich ausgerichtet sein und sehr schwanken.

Die Schmierstoffzusammensetzung oder/und der hieraus gebildete Überzug kann/können vorzugsweise mindestens ein lonomer mit einem wesentlichen Gehalt an mindestens einem Copolymer, insbesondere an einem Copolymer auf Basis von Polyacryl, Polymethacryl, Polyethylen oder/und Polypropylen, enthalten. Gegebenenfalls weist ein lonomer eine Glasübergangstemperatur T_{g} im Bereich von - 30 °C bis + 40 °C auf, vorzugsweise im Bereich von - 20 bis + 20 °C. Das Molekulargewicht des lonomers liegt vorzugsweise im Bereich von 2.000 bis 15.000, besonders bevorzugt im Bereich von 3.000 bis 12.000 oder von 4.000 bis 10.000. Besonders bevorzugt enthält/enthalten die Schmierstoffzusammensetzung oder/und der hieraus gebildete Überzug mindestens ein lonomer auf Basis von Ethylenacrylat oder/und Ethylenmethacrylat, vorzugsweise eines mit einem Molekulargewicht im Bereich von 3.500 bis 10.500 - besonders bevorzugt im Bereich von 5.000 bis 9.500 - oder/und mit einer Glasübergangstemperatur T_{g} im Bereich von - 20 °C bis + 30 °C. Bei mindestens einem lonomer auf Basis von Ethylenacrylat oder/und Ethylenmethacrylat kann der Acrylat-Anteil bis zu etwa 25 Gew.-% betragen. Ein etwas höheres Molekulargewicht kann für höher beanspruchbare Überzüge vorteilhaft sein. Denn es deuteten sich Tendenzen an, dass sich ein höheres Molekulargewicht des lonomers und dass eine höhere Viskosität der Zusammensetzung im Temperaturbereich von etwa 100 °C bis in die Gröβenordnung von ca. 300, 350 oder 400 °C sich auf die mechanische Belastbarkeit der hiermit hergestellten Überzüge vorteilhaft auswirkt und schwerere Kaltumformungen ermöglicht. Gegebenenfalls kann insbesondere beim Trocknen oder/und beim Kaltumformen eine Vernetzung des lonomers z.B. mit jeweils mindestens einem Amin, Carbonat, Epoxid, Hydroxid, Oxid, Tensid oder/und mit mindestens einer Carboxylgruppen enthaltenden Verbindung einsetzen. Je höher der Anteil des lonomers in der Schmierstoffzusammensetzung oder/und im Überzug ist, desto schwerere Kaltumformungen sind in vielen Ausführungsformen möglich. Manche Ionomer-Zusätze dienen auch dazu, im Anfangsstadium des Kaltumformens insbesondere bei kaltem Werkstück und bei kaltem Werkzeug bereits eine Schmierung zu gewährleisten und die Reibung zu senken. Dies ist umso wichtiger, je einfacher oder/und schwächer die Kaltumformung ist und je niedriger die Umformtemperatur ist.

Der Schmelzpunkt des mindestens einen lonomers liegt in vielen Ausführungsformen vorzugsweise im Bereich von 30 bis 85 °C. Seine Glasübergangstemperatur liegt vorzugsweise unter 35 °C. Mindestens ein lonomer wird vorzugsweise als Dispersion zugesetzt.

### Nicht-Ionomere:

Darüber hinaus können in der Schmierstoffzusammensetzung oder/und im hieraus gebildeten Überzug, insbesondere im polymeren organischen Material, weitere organische polymere Bestandteile enthalten sein wie z.B. Oligomere, Polymere oder/und Copolymere auf Basis von Acrylsäure/Methacrylsäure, Amid, Amin, Aramid, Epoxid, Ethylen, Imid, Polyester, Propylen, Styrol, Urethan, deren Ester(n) oder/und deren Salze(n), die nicht als lonomere anzusehen sind (= "Nicht-Ionomer"). Hierzu gehören beispielsweise auch Polymere/Copolymere auf Basis von Acrylsäure, Acrylsäureester, Methacrylsäure, Methacrylsäureester, vollaromatische Polyamide, vollaromatische Polyester, vollaromatische Polyimide oder/und Styrolacrylate. Blockcopolymere und Pfropfcopolymere werden als Untergruppe der Copolymere angesehen.

Sie dienen je nach Ausführungsform zur Viskositätssteigerung bei erhöhter Temperatur, als Schmierstoffe, als Hochtemperaturschmierstoffe, zum Anheben der Viskosität insbesondere im Temperaturbereich von 100 bis 250, von 100 bis 325 oder sogar von 100 bis 400 °C, als hochtemperaturbeständige Substanzen, als Substanzen mit wachsartigen Eigenschaften, als Verdicker (= Viskositätsregulatoren), als Additive, zum Erzielen von zusätzlichen Erweichungsbereichen/Erweichungspunkten oder/und Schmelzbereichen/Schmelzpunkten oder/und zur Ausgestaltung der Schmierstoffzusammensetzung mit mehreren Erweichungsbereichen/Erweichungspunkten oder/und Schmelzbereichen/Schmelzpunkten in gewissen Temperaturabständen. Unter anderem können manche Acryl-haltigen Polymere/Copolymere und manche Styrolacrylate als Verdicker wirken.

Polyethylen oder Polypropylen können vorzugsweise durch Propylen, Ethylen, ihre entsprechenden Polymerisate oder/und durch weitere Zusätze wie Acrylat modifiziert sein. Sie können vorzugsweise wachsartige Eigenschaften aufweisen. Sie können vorzugsweise mindestens einen Erweichungsbereich/Erweichungspunkt oder/und mindestens einen Schmelzbereich/Schmelzpunkt im Bereich von 80 bis 250 °C aufweisen.

Die Polymere oder/und Copolymere dieser Substanzen weisen vorzugsweise ein Molekulargewicht im Bereich von 1.000 bis 500.000 auf. Einzelne Substanzen weisen vorzugsweise ein Molekulargewicht im Bereich von 1.000 bis 30.000, andere eines im Bereich von 25.000 bis 180.000 oder/und im Bereich von 150.000 bis 350.000. Besonders hochmolekulare Substanzen können als Verdicker eingesetzt werden. Auch ein Acryl- oder/und ein Styrolacrylat-Zusatz kann verdickend wirken. In manchen Ausführungsformen werden bzw. sind der lonomer-haltigen Schmierstoffzusammensetzung oder/und dem Überzug ein, zwei, drei, vier oder fünf verschiedene Nicht-Ionomere zugesetzt. Die Schmierstoffzusammensetzung oder/und der hieraus gebildete Überzug weist/weisen vorzugsweise keinen Gehalt oder einen Gehalt an mindestens einem Nicht-Ionomer im Bereich von 0,1 bis 90 Gew.-% der Fest- und Wirkstoffe auf. Besonders bevorzugt beträgt der Gehalt an dem mindestens einen Nicht-Ionomer 0,5 bis 80, 1 bis 65, 3 bis 50, 5 bis 40, 8 bis 30, 12 bis 25 oder 15 bis 20 Gew.-% der Fest- und Wirkstoffe der Schmierstoffzusammensetzung bzw. des Überzugs.

Sowohl die einzelnen oder die vorgemischten Ionomere, als auch die einzelnen oder die vorgemischten Nicht-Ionomere können jeweils, unabhängig voneinander, als Lösung, kolloidale Lösung, Dispersion oder/und Emulsion der wässerigen Schmierstoffzusammensetzung zugesetzt werden.

Besonders bevorzugt enthält die Schmierstoffzusammensetzung als NichtIonomere, die keine Wachse im Sinne dieser Anmeldung sind:
a) 0,1 bis 50 Gew.-% und insbesondere 5 bis 30 Gew.-% im Wesentlichen an wachsartigem Polyethylen oder/und an wachsartigem Polypropylen jeweils mit mindestens einem Erweichungsbereich/Erweichungspunkt oder/und Schmelzbereich/Schmelzpunkt oberhalb von 120 °C,
b) 0,1 bis 16 Gew.-% und insbesondere 3 bis 8 Gew.-% im Wesentlichen an Polyacrylat mit einem Molekulargewicht im Bereich von 4.000 bis 1.500.000 - besonders bevorzugt im Bereich von 400.000 bis 1.200.000 - oder/und
c) 0,1 bis 18 Gew.-% und insbesondere 2 bis 8 Gew.-% Polymer/Copolymer auf Basis von Styrol, Acrylsäure oder/und Methacrylsäure mit einem Molekulargewicht im Bereich von 120.000 bis 400.000 oder/und mit einem Glasübergangspunkt T_{g} im Bereich von 30 bis 80 °C.

Die lonomere oder/und Nicht-Ionomere können zumindest teilweise, insbesondere die Acrylsäurekomponenten der Polymere gemäß b) und c), vorzugsweise unter Anwendungsbedingungen teilweise, insbesondere zum überwiegenden Teil oder vollständig, als Salze anorganischer oder/und organischer Kationen vorliegen. Falls auch Nicht-Ionomer in der Schmierstoffzusammensetzung enthalten ist, liegt das Gewichtsverhältnis der Gehalte an lonomer(en) zu Nicht-Ionomer(en) vorzugsweise im Bereich von 1 : 3 bis 50 : 1, besonders bevorzugt im Bereich von 1 : 1 bis 35 : 1, von 2 : 1 bis 25 : 1, von 4 : 1 bis 18 : 1 oder von 8 : 1 bis 12 : 1.

Die Schmierstoffzusammensetzung oder/und der hiermit hergestellte Überzug weist/weisen einen Gesamtgehalt an jeweils mindestens einem lonomer oder/und Nicht-Ionomer vorzugsweise von Null oder im Bereich von 3 bis 99 Gew.-% der Fest- und Wirkstoffe auf. Besonders bevorzugt beträgt dieser Gehalt 10 bis 97, 20 bis 94, 25 bis 90, 30 bis 85, 35 bis 80, 40 bis 75, 45 bis 70, 50 bis 65 oder 55 bis 60 Gew.-% der Fest- und Wirkstoffe der Schmierstoffzusammensetzung oder/und des Überzugs. Verdicker auf Basis von Nicht-Ionomeren sind hierbei einbezogen. Je nach den geplanten Anwendungsbedingungen und Kaltumformvorgängen und je nach der Ausgestaltung der Schmierstoffzusammensetzung oder/und des Überzugs kann der Gehalt an lonomer(en) oder/und Nicht-Ionomer(en) in weiten Grenzen schwanken. Besonders bevorzugt ist zumindest ein Gehalt an mindestens einem lonomer.

Vorzugsweise hat das gesamte organische polymere Material - dieser Begriff soll lonomer(e) oder/und Nicht-Ionomer(e), aber keine Wachse umfassen - eine durchschnittliche Säurezahl im Bereich von 20 bis 300, besonders bevorzugt im Bereich von 30 bis 250, von 40 bis 200, von 50 bis 160 oder von 60 bis 100. Der Begriff "das gesamte organische polymere Material" soll lonomer(e) oder/und Nicht-Ionomer(e), aber keine Wachse umfassen.

In vielen erfindungsgemäßen Ausführungsformen enthalten die Schmierstoffzusammensetzungen oder/und die hieraus gebildeten Überzüge mindestens zwei Arten an organischen polymeren Substanzen ausgewählt aus lonomeren und Nicht-ionomeren, die über den Temperaturbereich von 40 bis 260 °C insgesamt mindestens zwei Bereiche oder/und Peaks des Erweichens oder/und des Schmelzens aufweisen, von denen mindestens zwei mindestens 30 °C, vorzugsweise mindestens 40, mindestens 50 oder mindestens 60 °C auseinander liegen, wobei vorzugsweise eine näherungsweise kontinuierliche oder näherungsweise abgestufte Änderung des Erweichens oder/und des Schmelzens des Überzugs über den Temperaturverlauf beim Kaltumformen erzielt wird. In vielen erfindungsgemäßen Ausführungsformen enthalten die Schmierstoffzusammensetzungen oder/und die hieraus gebildeten Überzüge mindestens zwei Arten an organischen polymeren Substanzen ausgewählt aus lonomeren und Nicht-ionomeren, die über den Temperaturbereich von 40 bis 160 °C oder von 40 bis 260 °C insgesamt mindestens drei Bereiche oder/und Peaks des Erweichens oder/und des Schmelzens aufweisen, wobei vorzugsweise eine näherungsweise kontinuierliche oder näherungsweise abgestufte Änderung des Erweichens oder/und des Schmelzens des Überzugs über den Temperaturverlauf beim Kaltumformen erzielt wird. Mit einer DSC-Apparatur lassen sich die endotherme Bereiche oder/und Peaks des Erweichens oder/und Schmelzens ermitteln.

Besonders bevorzugt ist dabei in manchen Ausführungsformen, dass über den Temperaturbereich von der maximalen Temperaturbelastung bis 50 °C unterhalb der maximalen Temperaturbelastung der umzuformenden Werkstücke bei einer bestimmten Kaltumformung nur eine Viskositätsabnahme um maximal 10 % oder keine Viskositätsabnahme der aufheizenden, erweichenden oder/und schmelzenden Überzüge eintritt.

### Neutralisationsmittel:

Besonders vorteilhaft ist es, wenn mindestens ein lonomer oder/und mindestens ein Nicht-Ionomer zumindest teilweise neutralisiert wird/werden, zumindest teilweise verseift wird oder/und zumindest teilweise als mindestens ein organisches Salz in der Schmierstoffzusammensetzung oder/und im Überzug vorliegt. Der Begriff "Neutralisation" bedeutet hierbei die zumindest teilweise Umsetzung von mindestens einer organischen polymeren Substanz mit einem Gehalt an Carboxylgruppen, das heißt insbesondere von mindestens einem lonomer oder/und mindestens einem Nicht-Ionomer, mit einer basischen Verbindung (= Neutralisationsmittel), um zumindest teilweise ein organisches Salz zu bilden (Salzbildung). Falls hierbei auch mindestens ein Ester umgesetzt wird, kann von Verseifung gesprochen werden. Für die Neutralisation der Schmierstoffzusammensetzung wird als Neutralisationsmittel vorzugsweise jeweils mindestens ein primäres, sekundäres oder/und tertiäres Amin, Ammoniak oder/und mindestens ein Hydroxid verwendet - beispielsweise Ammoniumhydroxid, mindestens ein Alkalihydroxid wie z.B. Lithium-, Natrium- oder/und Kaliumhydroxid oder/und mindestens ein Erdalkalihydroxid. Besonders bevorzugt ist ein Zusatz von mindestens einem Alkylamin, von mindestens einem Aminalkohol oder/und von mindestens einem hiermit verwandten Amin wie z.B. jeweils mindestens ein Alkanolamin, ein Aminoethanol, ein Aminopropanol, ein Diglykolamin, ein Ethanolamin, ein Ethylendiamin, ein Monoethanolamin, ein Diethanolamin oder/und ein Triethanolamin, insbesondere Dimethylethanolamin, 1-(Dimethylamino)-2-propanol oder/und 2-Amino-2-methyl-1-propanol (AMP). Das mindestens eine organische Salz, insbesondere mindestens ein Salz anorganischer oder/und organischer Kationen wie Ammoniumionen, kann beispielsweise durch Zusatz von mindestens einem Neutralisationsmittel zu mindestens einem lonomer oder/und zu mindestens einem Nicht-Ionomer oder/und zu einem Gemisch, das mindestens eines dieser polymeren organischen Materialien und gegebenenfalls mindestens eine weitere Komponente wie z.B. mindestens zwei Wachsen oder/und mindestens ein Additiv enthält, gebildet werden. Die Salzbildung kann vor oder/und bei der Herstellung der Schmierstoffzusammensetzung oder/und in der Schmierstoffzusammensetzung erfolgen. Das Neutralisationsmittel, insbesondere mindestens ein Aminalkohol, bildet vielfach im Temperaturbereich von Raumtemperatur bis etwa 100 °C, insbesondere bei Temperaturen im Bereich von 40 bis 95 °C, mit mindestens einem lonomer oder/und mit mindestens einem Nicht-Ionomer entsprechende Salze. Es wird angenommen, dass das Neutralisationsmittel in manchen Ausführungsformen, insbesondere mindestens ein Aminalkohol, mit dem wasserlöslichen, wasserhaltigen oder/und wasserbindenden Oxid oder/und Silicat chemisch reagieren kann und dabei ein sich für die Kaltumformung vorteilhaft verhaltendes Reaktionsprodukt bildet.

Es hat sich in mehreren Ausführungsvarianten als vorteilhaft erwiesen, mindestens ein Amin, insbesondere mindestens einen Aminalkohol, einem einzelnen lonomer, einem einzelnen Nicht-Ionomer, einem mindestens ein Ionomer enthaltenden Gemisch oder/und einem mindestens ein Nicht-Ionomer enthaltenden Gemisch vorab bei der Herstellung der wässerigen Schmierstoffzusammensetzung zuzusetzen. Der vorherige Zusatz ist oft von Vorteil, um die Reaktionen zu organischen Salzen zu ermöglichen. Die Amine reagieren in der Regel mit jedem organischen polymeren Material, das Carboxylgruppen enthält, soweit die Temperaturen für die Reaktionen ausreichend hoch sind. Diese Reaktionen erfolgen vorzugsweise etwa bei oder oberhalb der Temperaturen des Schmelzpunktes/Schmelzbereichs der entsprechenden polymeren Verbindungen. Wenn die Temperatur unterhalb des Schmelzpunktes/Schmelzbereichs der entsprechenden polymeren Verbindungen bleibt, wird vielfach keine Umsetzung zu einem organischen Salz erfolgen. Das wird dann die Reinigung des umgeformten Werkstücks nicht erleichtern können. Als Alternative bleiben dann nur die Möglichkeiten, die entsprechenden polymeren Verbindungen separat und aufwendig bei hohem Druck und erhöhter Temperatur umzusetzen oder/und bereits derart umgesetzte Substanzen der Schmierstoffzusammensetzung zuzusetzen. Wässerige Schmierstoffzusammensetzungen mit einem Zusatz an Ammoniak sollten vorzugsweise nicht über 30 °C erwärmt werden. Wässerige Schmierstoffzusammensetzungen mit einem Zusatz an mindestens einem Amin sollten werden vorzugsweise in einem Temperaturbereich von 60 bis 95 °C gehalten, in dem viele Umsetzungen zu Aminsalzen stattfinden.

Der Zusatz von mindestens einem Neutralisationsmittel wie z.B. mindestens eines Amins oder/und mindestens eines Aminalkohols hilft, das organische polymere Material besser wasserlöslich oder/und besser wasserdispergierbar zu machen. Die Reaktionen zu entsprechenden Salzen verlaufen bevorzugt mit wasserlöslichen oder/und wasserdispergierten organischen polymeren Materialien. Besonders bevorzugt ist, dass das mindestens eine Neutralisationsmittel, insbesondere mindestens ein Amin, bereits frühzeitig bei dem Zusammenmischen der verschiedenen Komponenten der wässerigen Schmierstoffzusammensetzung zugesetzt wird und dadurch gegebenenfalls mindestens ein bereits enthaltenes organisches polymeres Material oder/und mindestens ein danach zugegebenes organisches polymeres Material zumindest teilweise neutralisiert wird.

Vorzugsweise wird das Neutralisationsmittel im Überschuss zugegeben oder/und ist in der Schmierstoffzusammensetzung oder/und im Überzug im Überschuss enthalten.

Das mindestens eine Neutralisationsmittel, insbesondere der mindestens eine Aminalkohol, kann hierbei auch zur Einstellung des pH-Wertes eines Gemisches bzw. der wässerigen Schmierstoffzusammensetzung verwendet werden.

Die organischen Salze haben gegenüber den lonomeren oder/und gegenüber den Nicht-Ionomeren den Vorteil, dass sie oft besser wasserlöslich oder/und besser wasserdispergierbar sind als die entsprechenden lonomere oder/und Nicht-Ionomere. Dadurch lassen sich in der Regel die Überzüge und Ablagerungen vom Kaltumformen besser vom umgeformten Werkstück entfernen. Häufig ergeben sich mit den organischen Salzen niedrigere Erweichungsbereiche/Erweichungspunkte oder/und niedrigere Schmelzbereiche/Schmelzpunkte, was oft vorteilhaft ist. Gegebenenfalls ergeben sich für die gewünschten Verarbeitungsbedingungen auch bessere Schmiereigenschaften.

Als organische Salze sind vor allem Aminsalze oder/und organische Ammoniumsalze bevorzugt. Ganz besonders bevorzugt sind Aminsalze, da diese nach dem Aufbringen der wässerigen Schmierstoffzusammensetzung ihre Zusammensetzung nicht stärker verändern und eine höhere Wasserlöslichkeit oder/und Wasserdispergierbarkeit aufweisen und daher dazu beitragen, die Beschichtung und die Ablagerungen auf dem umgeformten Werkstück nach dem Kaltumformen vergleichsweise leicht zu entfernen. Bei den organischen Ammoniumsalzen dagegen entweicht nach dem Aufbringen der wässerigen Schmierstoffzusammensetzung schnell Ammoniak, was nicht nur eine Geruchsbelästigung darstellen kann, sondern auch eine Rückreaktion der Ammoniumsalze zu den ursprünglichen organischen polymeren Substanzen bedingt, die sich dann später schlechter als die Aminsalze entfernen lassen. Dabei ergeben sich chemisch und in Wasser recht beständige Überzüge. Bei Verwendung von Hydroxid(en) als Neutralisationsmittel ergeben oft recht harte und spröde, aber wasserempfindliche Überzüge.

Der Gehalt des mindestens einen Neutralisationsmittels, insbesondere auch des mindestens einen Aminalkohols, in der Schmierstoffzusammensetzung kann - insbesondere je nach Säurezahl des lonomers bzw. Nicht-Ionomers - zu Beginn der Neutralisationsreaktion vorzugsweise bei Null oder im Bereich von 0,05 bis 15, von 0,2 bis 12, von 0,5 bis 10, von 0,8 bis 8, von 1 bis 6, von 1,5 bis 4 oder von 2 bis 3 Gew.-% der Fest- und Wirkstoffe liegen. Höhere Gehalte können in manchen Ausführungsformen insbesondere bei einem Zusatz von mindestens einem Amin vorteilhaft sein, während bei einem Zusatz von Ammoniak oder/und mindestens einem Hydroxid in den meisten Ausführungsformen eher geringere Gehalte gewählt werden. Das Gewichtsverhältnis der Gehalte an Neutralisationsmittel(n), insbesondere auch an Aminalkohol(en), zu Gehalten an Ionomer(en) oder/und Nicht-Ionomer(en) oder/und zum Gesamtgehalt an organischem polymeren Material liegt vorzugsweise im Bereich von 0,001 : 1 bis 0,2 : 1, besonders bevorzugt im Bereich von 0,003 : 1 bis 0,15 : 1, von 0,006 : 1 bis 0,1 : 1 oder von 0,01 : 1 bis 0,05 : 1.

Die erfindungsgemäße Schmierstoffzusammensetzung oder/und der hieraus gebildete Überzug weist/weisen vorzugsweise keinen Gehalt oder einen Gehalt an mindestens einem organischen Salz, das vorzugsweise durch Neuttralisation gebildet wurde, im Bereich von 0,1 bis 95 oder 1 bis 90 Gew.-% der Fest- und Wirkstoffe auf. Vorzugsweise beträgt der Gehalt an mindestens einem Salz 3 bis 85, 8 bis 80, 12 bis 75, 20 bis 70, 25 bis 65, 30 bis 60, 35 bis 55 oder 40 bis 50 Gew.-% der Fest- und Wirkstoffe der Schmierstoffzusammensetzung. Das Gewichtsverhältnis der Gehalte an mindestens einem organischen Salz zu Gehalten an Ionomer(en) oder/und Nicht-Ionomer(en) liegt in der Schmierstoffzusammensetzung oder/und im Überzug vorzugsweise im Bereich von 0,01 : 1 bis 100 : 1, besonders bevorzugt im Bereich von 0,1 : 1 bis 95 : 1, von 1 : 1 bis 90 : 1, von 2 : 1 bis 80 : 1, von 3 : 1 bis 60 : 1, von 5 : 1 bis 40 : 1 oder von 8 : 1 bis 20 : 1.

### Wachse:

Entsprechend der in dieser Anmeldung verwendeten Definition soll ein Wachs eine Verbindung bedeuten, die einen definierten Schmelzpunkt hat, die im geschmolzenen Zustand eine recht geringe Viskosität aufweist und die geeignet ist, in kristalliner Form aufzutreten. Typischerweise weist ein Wachs keinen oder keinen wesentlichen Gehalt an Carboxylgruppen auf, ist hydrophob und ist in hohem Ausmaß chemisch inert.

Die Schmierstoffzusammensetzung oder/und der hieraus gebildete Überzug enthält mindestens zwei Wachse, insbesondere jeweils mindestens ein Paraffinwachs, ein Carnaubawachs, ein Silikonwachs, ein Amidwachs, ein Ethylen- oder/und ein Propylen-basiertes Wachs oder/und ein kristallines Wachs enthalten. Insbesondere kann es zur Erhöhung der Gleit- oder/und Kriechfähigkeit des sich bildenden oder/und gebildeten Überzugs, der Trennung von Werkstück und Werkzeug sowie zur Reibungsminderung dienen. Vorzugsweise ist ein Gesamtgehalt an mindestens zwei Wachsen im Bereich von 5 bis 60 Gew.-% der Fest- und Wirkstoffe in der Schmierstoffzusammensetzung oder/und im Überzug enthalten, besonders bevorzugt und insbesondere je nach den Einsatzbedingungen und chemischer Gesamtzusammensetzung beispielsweise im Bereich von 5 bis 52, 5 bis 40, 5 bis 35, 5 bis 30, 5 bis 25, 5 bis 20, 6 bis 15, 7 bis 12 oder 8 bis 10 Gew.-% der Fest- und Wirkstoffe. Vorzugsweise liegt der Gehalt an dem einzelnen Wachs jeweils im Bereich von 0,05 bis 36 Gew.-% der Fest- und Wirkstoffe in der Schmierstoffzusammensetzung oder/und im Überzug enthalten, besonders bevorzugt im Bereich von 0,5 bis 30, 1 bis 25, 2 bis 20, 3 bis 16, 4 bis 12, 5 bis 10 oder 6 bis 8 Gew.-% der Fest- und Wirkstoffe.

Mindestens ein Wachs kann vorzugsweise eine mittlere Partikelgröße im Bereich von 0,01 bis 15 µm aufweisen, besonders bevorzugt im Bereich von 0,03 bis 8 µm oder 0,1 bis 4 µm. Bei diesen Partikelgrößen kann es in vielen Ausführungsformen bevorzugt sein, wenn die Wachspartikel zumindest teilweise aus dem gebildeten Überzug herausstehen.

Auch wenn lonomere bzw. wachsartige Nicht-Ionomere teilweise ähnliche Eigenschaften wie Wachse aufweisen, können sie die Wachse am ehesten nur bei geringen Anforderungen an die Kaltumformung oder bei außerordentlich hohem Gehalt an lonomer ersetzen. In den meisten Ausführungsformen ist jedoch ein Zusatz von mindestens zwei Wachsen zu der Schmierstoffzusammensetzung oder/und im Überzug vorzuziehen; vor allem ist ein Gehalt von mindestens zwei Wachsen von deutlich unterschiedlichen Eigenschaften vorteilhaft. Der zumindest teilweise erweichte oder zumindest teilweise schmelzende Überzug kann während der Kaltumformung auf dem umzuformenden Werkstück aufziehen und einen Trennfilm zwischen Werkstück und Werkzeug bilden. Hierdurch können z.B. Riefen im Werkstück vermieden werden.

Das Gewichtsverhältnis der Gesamtgehalte an mindestens zwei Wachsen zum Gesamtgehalt an Ionomer(en) oder/und Nicht-Ionomer(en) in der Schmierstoffzusammensetzung oder/und im hieraus gebildeten Überzug liegt vorzugsweise im Bereich von 0,01 : 1 bis 8 : 1, besonders bevorzugt im Bereich von 0,08 : 1 bis 5 : 1, von 0,2 : 1 bis 3 : 1, von 0,3 : 1 bis 2 : 1, von 0,4 : 1 bis 1,5 : 1, von 0,5 : 1 bis 1 : 1 oder von 0,6 : 1 bis 0,8 : 1. Hierdurch können unterschiedliche Gehaltsbereiche besonders vorteilhaft sein: Einmal sehr geringe, ein anderes Mal sehr hohe Gehalte. Ein vergleichsweise sehr hoher Wachsgehalt empfiehlt sich beim Gleitziehen, beim Tiefziehen und bei leichten bis mittelschweren Kaltmassivumformungen. Ein vergleichsweise geringer Wachsgehalt hat sich bei schwerem Kaltfließpressen oder bei schwierigen Gleitziehoperationen wie z.B. von Massivteilen und von besonders dickem Draht als ausreichend erwiesen.

Besonders bevorzugt ist ein Gehalt an zwei, drei, vier oder von mehr als vier verschiedenen Wachsen, insbesondere solchen, die deutlich unterschiedliche Schmelzbereiche/Schmelzpunkte oder/und Viskositäten aufweisen. Hierbei ist es bevorzugt, dass der aus der Schmierstoffzusammensetzung gebildete Überzug über einen größeren Temperaturbereich, der durch das Kaltumformen beim Aufheizen des metallischen Werkstücks durchlaufen wird, mehrere aufeinander folgende Erweichungsbereiche/Erweichungspunkte oder/und Schmelzbereiche/Schmelzpunkte aufweist, insbesondere so, dass sich eine im Wesentlichen kontinuierliche Änderung oder eine näherungsweise abgestufte Änderung der thermischen oder/und mechanischen Eigenschaften oder/und der Viskosität der Überzüge beim Kaltumformen ergibt.

Häufig weisen die Wachse der aus der Schmierstoffzusammensetzung gebildeten Überzüge mindestens einen Schmelzbereich/Schmelzpunkt im Bereich von 50 bis 120 °C (z.B. Paraffinwachse), von 80 bis 90 °C (z.B. Carnaubawachse), von 75 bis 200 °C (z.B. Amidwachse), von 90 bis 145 °C (z.B. Polyethylenwachse) oder von 130 bis 165 °C (z.B. Polypropylenwachse) auf. Im Falle von Schmelzbereichen anstelle von Schmelzpunkten wird zur Vereinfachung der Mittelwert des Schmelzbereichs verwendet. Zur Erfassung von Schmelzbereichen/Schmelzpunkten wurde ein Thermoanalysegerät DSC (Differential Scanning Calorimetry) 822e der Firma Mettler verwendet. Die Messungen fanden in Stickstoff-Inertamosphäre bei einer Aufheizrate von 10 K/min und bei einer Probeneinwaage von 5 bis 20 mg in A-luminiumtiegeln mit gelochtem Deckel statt. Auch das Abdampfverhalten kann dabei bis zu einem gewissen Grad beurteilt werden.

Niedrig-schmelzende Wachse können auch dazu dienen, im Anfangsstadium des Kaltumformens insbesondere bei kaltem Werkstück und bei kaltem Werkzeug bereits eine Schmierung zu gewährleisten und die Reibung zu senken. Darüber hinaus kann es vorteilhaft sein, sogar mindestens zwei niedrig-schmelzende Wachse - beispielsweise mit mindestens einem Schmelzbereich/Schmelzpunkt Tₘ im Bereich von 60 bis 90 oder 65 bis 100 °C - oder/und mindestens zwei hoch-schmelzende Wachse - beispielsweise mit mindestens einem Schmelzbereich/Schmelzpunkt Tₘ im Bereich von 110 bis 150 oder 130 bis 160 °C - zu verwenden. Dies ist insbesondere dann vorteilhaft, wenn diese Wachse bei jenen niedrigen oder hohen Temperaturen im Bereich des Schmelzbereichs/Schmelzpunktes deutlich unterschiedliche Viskositäten aufweisen, wodurch bei der aufgeheizten oder/und schmelzenden Schmierstoffzusammensetzung eine bestimmte Viskosität eingestellt werden kann. So kann beispielsweise ein hoch-schmelzendes Amidwachs dünnflüssiger sein als ein hoch-schmelzendes Polyethylen- oder/und Polypropylenwachs.

Als besonders vorteilhaft hat es sich erwiesen, wenn mindestens ein niedrigschmelzendes Wachs mit mindestens einem hoch-schmelzenden Wachs in der Schmierstoffzusammensetzung oder/und im hieraus gebildeten Überzug enthalten sind, deren Schmelzbereiche/Schmelzpunkte Tₘ mindestens 30 °C, vorzugsweise jeweils mindestens 40, 50, 60, 70 oder 80 °C auseinander liegen. Wenn jedoch mehr als zwei Wachse mit deutlich unterschiedlichen Eigenschaften in der Schmierstoffzusammensetzung oder/und im hieraus gebildeten Überzug enthalten sind, kann es vorteilhaft sein, dass ihre Schmelzpunkte zumindest teilweise nicht mehr als 50 oder nicht mehr als 60 °C auseinander liegen, es sei denn, dass man Wachse miteinander kombiniert, die sich in ihrer Viskosität deutlich unterscheiden.

In den erfindungsgemäßen Ausführungsformen weisen die aus den Schmierstoffzusammensetzungen gebildeten Überzüge mit einem Gehalt an mindestens zwei Wachsen über den Temperaturbereich von 40 bis 260 °C insgesamt mindestens zwei Bereiche oder/und Peaks des Schmelzens auf, von denen mindestens zwei mindestens 30 °C auseinander liegen. In vielen erfindungsgemäßen Ausführungsformen weisen die aus den Schmierstoffzusammensetzungen gebildeten Überzüge mit einem Gehalt an mindestens zwei Wachsen über den Temperaturbereich von 40 bis 129 °C und von 130 bis 260 °C jeweils mindestens einen Bereich oder/und Peak des Schmelzens auf. In vielen erfindungsgemäßen Ausführungsformen weisen die aus den Schmierstoffzusammensetzungen gebildeten Überzüge mit einem Gehalt an mindestens zwei Wachsen bei der thermischen Analyse z.B. in einer DSC-Apparatur endotherme Bereiche oder/und Peaks des Schmelzens auf, von denen mindestens ein Bereich oder/und Peak in den Temperaturbereich von 40 bis 109 °C und von denen mindestens ein Bereich oder/und Peak in den Temperaturbereich von 110 bis 260 °C fällt.

Die Wachse werden vorzugsweise je nach den Anwendungsbedingungen, das heißt je nach dem Werkstücke und seiner Komplexität, dem Umformverfahren und der Schwere der Kaltumformung, und den zu erwartenden Maximaltemperaturen an der Werkstückoberfläche, aber gegebenenfalls auch bezüglich bestimmter Schmelzbereiche/Schmelzpunkte über den gewünschten Verarbeitungsbereich, insbesondere über den gewünschten Temperaturbereich, ausgewählt.

### Festschmierstoffe und Reibwertminderer:

Die Schmierstoffzusammensetzung oder/und der hieraus gebildete Überzug kann/können mindestens einen Festschmierstoff oder/und mindestens einen Reibwertminderer enthalten. Insbesondere ist mindestens ein solcher Zusatz in der Schmierstoffzusammensetzung, im hieraus ausgebildeten Überzug oder/und im auf einem Überzug ausgebildeten Film auf Basis von mindestens einem Festschmierstoff vorteilhaft, wenn hohe Umformungsgrade gefordert sind. Der Gesamtgehalt an mindestens einem Festschmierstoff oder/und mindestens einem Reibwertminderer in der Schmierstoffzusammensetzung oder/und im hieraus gebildeten Überzug liegt vorzugsweise entweder bei Null oder im Bereich von 0,5 bis 50, 1 bis 45, 3 bis 40, 5 bis 35, 8 bis 30, 12 bis 25 oder 15 bis 20 Gew.-% der Fest- und Wirkstoffe.

Bei Bedarf kann einerseits der Schmierstoffzusammensetzung mindestens ein Festschmierstoff zugesetzt werden/sein oder/und andererseits kann auf den mit einer wässerigen Schmierstoffzusammensetzung hergestellten Überzug ein Film aufgebracht werden, der mindestens einen Festschmierstoff enthält. Üblicherweise wird dann mit mindestens einem Festschmierstoff gearbeitet, wenn der Festschmierstoff-freie Überzug für die Art und Schwere der Kaltumformung und für die Komplexität des Werkstücks nicht mehr ausreicht, sondern Gefahr besteht, dass eine Kaltverschweißung zwischen Werkstück und Werkzeug auftritt, dass größere Maßungenauigkeiten am umgeformten Werkstück auftreten oder/und dass geringere Umformungsgrade als bei den Arbeitsbedingungen erwartet erzielt werden. Denn in der Regel wird versucht werden, so lange wie möglich ohne Festschmierstoff zu arbeiten.

Als Festschmierstoff können vorzugsweise Molybdändisulfid, Wolframsulfide, Wismutsulfide oder/und amorpher oder/und kristalliner Kohlenstoff dienen. Vorzugsweise wird auch aus Gründen des Umweltschutzes Schwermetallfrei gearbeitet. Alle diese Festschmierstoffe haben den Nachteil, stark zu färben und stark zu verschmutzen. Die sulfidischen Festschmierstoffe haben den Nachteil, dass die Sulfide nicht hydrolysestabil sind und leicht in schwefelige Säure überführt werden. Die schwefelige Säure kann leicht Korrosion verursachen, wenn der Festschmierstoff enthaltende Überzug und die Festschmierstoff enthaltenden Ablagerungen nicht gleich nach der Kaltumformung vom Werkstück entfernt werden.

Die sulfidischen Festschmierstoffe sind insbesondere bei schwerer Kaltumformung und dabei entstehender mittlerer bis hoher Temperatur notwendig. Die Kohlenstoffzusätze sind insbesondere bei sehr hoher Temperatur und bei höherem Umformgrad vorteilhaft. Während Molybdändisulfid bis zu Temperaturen von etwa 450 °C eingesetzt werden kann, kann Graphit bis zu Temperaturen von etwa 1100 °C verwendet werden, wobei jedoch seine Schmierwirkung bei der Kaltumformung etwa erst bei 600 °C einsetzt. Daher wird häufig ein Gemisch aus Molybdändisulfid-Pulver, vorzugsweise besonders fein vermahlen, zusammen mit Graphit oder/und amorphem Kohlenstoff eingesetzt. Aber ein Kohlenstoff-Zusatz kann zu einem unerwünschten Aufkohlen eines Eisenwerkstoffs führen. Und ein Sulfid-Zusatz kann bei Edelstahl sogar zu interkristalliner Korrosion führen.

Die erfindungsgemäße Schmierstoffzusammensetzung oder/und der hieraus gebildete Überzug weist/weisen vorzugsweise keinen Gehalt oder einen Gehalt an mindestens einem Festschmierstoff im Bereich von 0,5 bis 50, 1 bis 45, 3 bis 40, 5 bis 35, 8 bis 30, 12 bis 25 oder 15 bis 20 Gew.-% der Fest- und Wirkstoffe auf.

Unter den weiteren Reibwertminderern kann in der Schmierstoffzusammensetzung beispielsweise mindestens eine der folgenden Substanzen verwendet werden: Alkalinitrat, Alkaliformiat, Alkalipropionat, Phosphorsäureester - vorzugsweise als Aminsalz, Thiophosphat wie z.B. Zinkdialkyldithiophosphat, Thiosulfat oder/und Alkalipyrophosphat - letzteres vorzugsweise kombiniert mit Alkalithiosulfat. Sie beteiligen sich in vielen Ausführungsformen an der Ausbildung einer Schutzschicht oder/und einer Trennschicht zum Trennen von Werkstück und Werkzeug und helfen, Kaltverschweißungen zwischen Werkstück und Werkzeug zu vermeiden. Sie können aber teilweise korrosiv wirken. Denn die Phosphor oder/und Schwefel enthaltenden Zusätze können mit der metallischen Oberfläche chemisch reagieren.

Die erfindungsgemäße Schmierstoffzusammensetzung oder/und der hieraus gebildete Überzug weist/weisen vorzugsweise keinen Gehalt oder einen Gehalt an mindestens einem Reibwertminderer im Bereich von 0,05 bis 5 oder 0,1 bis 4 Gew.-% der Fest- und Wirkstoffe auf, besonders bevorzugt im Bereich von 0,3 bis 3, von 0,5 bis 2,5 oder von 1 bis 2 Gew.-%.

### Additive:

Die Schmierstoffzusammensetzung oder/und der hieraus gebildete Überzug kann/können jeweils mindestens ein Additiv enthalten. Sie kann/können mindestens ein Additiv ausgewählt aus der Gruppe bestehend aus verschleißschützenden Additiven, Silan-Zusätzen, Elastomeren, Filmbildungshilfsmitteln, Korrosionsschutzmitteln, Tensiden, Entschäumern, Verlaufsmitteln, Bioziden, Verdickern und organischen Lösemitteln enthalten. Der Gesamtgehalt an Additiven in der Schmierstoffzusammensetzung oder/und im hieraus gebildeten Überzug liegt vorzugsweise im Bereich von 0,005 bis 20, 0,1 bis 18, 0,5 bis 16, 1 bis 14, 1,5 bis 12, 2 bis 10, 2,5 bis 8, 3 bis 7 oder 4 bis 5,5 Gew.-% der Fest- und Wirkstoffe. Verdicker auf Basis von Nicht-Ionomeren sind bei diesen Gehalten ausgenommen und werden bei den Nichtlonomeren berücksichtigt. Je nach den geplanten Anwendungsbedingungen und Kaltumformvorgängen und je nach der Ausgestaltung der Schmierstoffzusammensetzung oder/und des Überzugs können der Gehalt an und die Auswahl an Additiven in weiten Grenzen schwanken.

Ferner kann in der Schmierstoffzusammensetzung oder/und im hieraus gebildeten Überzug vorzugsweise mindestens eine der folgenden Substanzen verwendet werden/sein, um als verschleißschützende Additive oder/und als Reibungsminderer zu wirken: Organische polymere Substanzen erhöhter Temperaturstabilität wie z.B. Polyamidpulver oder/und Fluor-haltiges Polymer wie z.B. PTFE - bei denen beide Stoffklassen zu den Nicht-Ionomeren gehören, Silane/Silanole/Siloxane (= Silan-Zusatz), Polysiloxane, aber auch insbesondere Calcium-haltige Phosphate können so wirken. Die erfindungsgemäße Schmierstoffzusammensetzung oder/und der hieraus gebildete Überzug weist/weisen vorzugsweise keinen Gehalt oder einen Gehalt an mindestens einer verschleißschützenden organischen Substanz im Bereich von 0,1 bis 10 oder 0,5 bis 8 Gew.-% der Fest- und Wirkstoffe auf. Vorzugsweise beträgt dieser Gehalt 1 bis 6, 2 bis 5 oder 3 bis 4 Gew.-% der Fest- und Wirkstoffe.

In Versuchen wurden verschiedene wässerige Lösungen mit mindestens einem Silan-Zusatz in Konzentrationen im Bereich von 5 bis 50 Gew.-%, insbesondere auch eine 8%ige, eine 12%ige und eine 18%ige Lösung, auf Basis von mindestens einem Silan/Silanol/Siloxan auf Basis von γ-Aminopropyltriethoxysilan, Diaminosilan oder/und 1,2-Bis(trimethoxysilyl)ethan zum Vorspülen des phosphatierten Werkstücks verwendet, angetrocknet und danach mit der Schmierstoffzusammensetzung beschichtet. Alternativ kann diese Lösung auch der wässerigen Schmierstoffzusammensetzung zugemischt werden. In beiden Varianten wirkte sich dieser Zusatz mit einer deutlichen Verbesserung der Gleitfähigkeit aus. Insbesondere können hierzu jeweils mindestens ein Acyloxysilan, ein Alkoxysilan, ein Silan mit mindestens einer Aminogruppe wie ein Aminoalkylsilan, ein Silan mit mindestens einer Bernsteinsäuregruppe oder/und Bernsteinsäureanhydridgruppe, ein Bis-Silyl-Silan, ein Silan mit mindestens einer Epoxygruppe wie ein Glycidoxysilan, ein (Meth)acrylato-Silan, ein Multi-Silyl-Silan, ein Ureidosilan, ein Vinylsilan oder/und mindestens ein Silanol oder/und mindestens ein Siloxan von chemisch entsprechender Zusammensetzung wie die zuvor genannten Silane in der Schmierstoffzusammensetzung oder/und im Überzug enthalten sein.

Sie kann vorzugsweise mindestens ein Elastomer, insbesondere ein Hydroxy-terminiertes Polysiloxan vorzugsweise mit einem Molekulargewicht größer als 90.000, zur Erhöhung der Gleitfähigkeit und Kratzbeständigkeit enthalten, insbesondere mit einem Gehalt von 0,01 bis 5 oder von 0,2 bis 2,5 Gew.-% der Fest- und Wirkstoffe der Schmierstoffzusammensetzung oder/und des Überzugs.

Sie kann vorzugsweise mindestens ein Filmbildunoshilfsmittel zur Herstellung eines weitgehend oder gänzlich geschlossenen organischen Überzugs enthalten. In den meisten Ausführungsformen wird der Überzug zum Kaltumformen nicht vollständig geschlossen sein, was für diese Einsatzzwecke völlig ausreicht, wenn er anschließend vom umgeformten Werkstück wieder entfernt wird. Falls jedoch der Überzug zumindest teilweise auf dem umgeformten Werkstück zumindest teilweise verbleiben soll, kann in manchen Ausführungsformen der Zusatz von mindestens einem Filmbildungshilfsmittel vorteilhaft sein. Eine Filmbildung unter Einwirkung des mindestens einen Filmbildungshilfsmittels kann insbesondere zusammen mit entsprechenden Nicht-Ionomeren sowie beispielsweise mit Wasserglas erfolgen. Der Film kann insbesondere zusammen mit Ionomeren, Nicht-Ionomeren sowie beispielsweise mit Wasserglas gebildet werden. Der Zusatz von Filmbildungshilfsmittel(n) lohnt sich insbesondere bei Überzügen, die nach dem Kaltumformen zumindest teilweise auf dem umgeformten Werkstück erhalten bleiben sollen wie z.B. bei Lenkungsteilen. Hierdurch kann das Werkstück dort auf Dauer vor Korrosion geschützt werden. Als Filmbildungshilfsmittel werden üblicherweise langkettige Alkohole oder/und Alkoxylate eingesetzt. Vorzugsweise werden jeweils mindestens ein Butandiol, ein Butylglykol, ein Butyldiglykol, ein Ethylenglykolether oder/und jeweils mindestens ein Polypropylenglykolether, ein Polytetrahydrofuran, ein Polyetherpolyol oder/und ein Polyesterpolyol eingesetzt. Vorzugsweise liegt der Gehalt an Filmbildungshilfsmittel(n) in der Schmierstoffzusammensetzung im Bereich von 0,03 bis 5 Gew.-% der Fest- und Wirkstoffe der Schmierstoffzusammensetzung oder/und des Überzugs, besonders bevorzugt bei 0,1 bis 2 Gew.-%. Das Gewichtsverhältnis der Gehalte an organischem Filmbildner zu Gehalten an Filmbildungshilfsmitteln in der Schmierstoffzusammensetzung liegt vorzugsweise im Bereich von 10 : 1 bis 400 : 1, von 20 : 1 bis 250 : 1 oder von 40 : 1 bis 160 : 1, besonders bevorzugt im Bereich von 50 : 1 bis 130 : 1, von 60 : 1 bis 110 : 1 oder von 70 : 1 bis 100 : 1.

Die erfindungsgemäße Schmierstoffzusammensetzung kann vorzugsweise mindestens ein Korrosionsschutzmittel wie z.B. auf Basis von Carboxylat, Dicarbonsäure, organischem Aminsalz, Succinat oder/und Sulfonat enthalten. Ein solcher Zusatz kann insbesondere bei Überzügen, die auf dem umgeformten Werkstück zumindest teilweise auf Dauer verbleiben sollen, oder/und bei der Gefahr des Anrostens, z.B. beim Flash Rusting, von Vorteil sein. Das mindestens eine Korrosionsschutzmittel ist vorzugsweise in einem Gehalt von 0,005 bis 2 Gew.-% der Fest- und Wirkstoffe der Schmierstoffzusammensetzung oder/und des Überzugs, besonders bevorzugt von 0,1 bis 1,2 Gew.-% enthalten.

Die Schmierstoffzusammensetzung kann vorzugsweise jeweils mindestens ein Tensid, einen Entschäumer, ein Verlaufsmittel oder/und ein Biozid enthalten. Diese Additive sind vorzugsweise jeweils in einem Gehalt von 0,005 bis 0,8 Gew.-% der Fest- und Wirkstoffe der Schmierstoffzusammensetzung oder/und des Überzugs, besonders bevorzugt von 0,01 bis 0,3 Gew.-% enthalten.

Ein Tensid kann als Verlaufsmittel dienen. Mindestens ein Tensid kann insbesondere ein nichtionisches Tensid sein; dieses ist vorzugsweise ein ethoxylierter Fettalkohol mit 6 bis 20 Ethylenoxidgruppen. Das mindestens eine Tensid ist vorzugsweise in einem Gehalt von 0,01 bis 2 Gew.-%, besonders bevorzugt von 0,05 bis 1,4 Gew.-% enthalten. Die Zugabe eines Entschäumers kann u.U. vorteilhaft sein, um die Neigung zur Schaumbildung, die insbesondere durch ein zugesetztes Tensid verstärkt oder hervorgerufen werden kann, zu bremsen.

Die Schmierstoffzusammensetzung kann vorzugsweise mindestens einen Verdicker enthalten, der als polymerer organischer Verdicker zu den Nicht-Ionomeren gehört und ansonsten nicht zu den Nicht-Ionomeren, sondern zu den Additiven gehört. Vorzugsweise wird hierzu jeweils mindestens eine primäre oder/und tertiäre Amin-enthaltende Verbindung, eine Cellulose, ein Cellulose-Derivat, ein Silicat wie z.B. eines auf Basis von Bentonit oder/und mindestens einem anderen Schichtsilicat, eine Stärke, ein Stärke-Derivat oder/und ein Zucker-Derivat eingesetzt. Er ist vorzugsweise in der Schmierstoffzusammensetzung oder/und im hieraus gebildeten Überzug in einem Gehalt von 0,1 bis 12 oder von 1 bis 6 Gew.-% der Fest- und Wirkstoffe der Schmierstoffzusammensetzung oder/und des Überzugs enthalten.

Darüber hinaus kann gegebenenfalls auch mindestens ein organisches Lösemittel oder/und mindestens ein Lösungsvermittler zugegeben werden oder/und in der Schmierstoffzusammensetzung enthalten sein.

Vorzugsweise sind in der Schmierstoffzusammensetzung oder/und im hieraus gebildeten Überzug jeweils keine oder keine höheren Gehalte (z.B. weniger als 0,5 Gew.-% der Fest- und Wirkstoffe der Schmierstoffzusammensetzung oder/und des Überzugs) enthalten an Chlor-haltigen Verbindungen, Fluor-haltigen Verbindungen wie insbesondere Fluor-haltigen Polymeren/Copolymeren, Verbindungen auf Basis von oder mit einem Gehalt an Isocyanat oder/und Isocyanurat, Melaminharz, Phenolharz, Polyethylenimin, Polyoxyethylen, Polyvinylacetat, Polyvinylalkohol, Polyvinylester, Polyvinylpyrrolidon, stärker korrodierend wirkenden Substanzen, an umweltunfreundlichen oder/und giftigen Schwermetallverbindungen, an Boraten, Chromaten, Chromoxiden, weiteren Chromverbindungen, Molybdaten, Phosphaten, Polyphosphaten, Vanadaten, Wolframaten, Metallpulvern oder/und an einer in der Kaltumformung gebräuchlichen Seife wie Alkali- oder/und Erdalkalistearate oder/und wie weitere Derivate von Fettsäuren mit einer Kettenlänge im Bereich von etwa 8 bis etwa 22 Kohlenstoffatomen. Insbesondere in Ausführungsformen, die frei sind von Nicht-Polymer, ist es bevorzugt, der Schmierstoffzusammensetzung kein Filmbildungshilfsmittel zuzusetzen.

### Gesamtzusammensetzung:

Die Schmierstoffzusammensetzung weist in vielen Ausführungsformen einen Feststoff- und Wirkstoffgehalt vorzugsweise im Bereich von 2 bis 95 Gew.- %, insbesondere im Bereich von 3 bis 85, 4 bis 70 oder 5 bis 50, 10 bis 40, 12 bis 30 oder 15 bis 22 Gew.-% auf, wobei die restlichen Gehalte bis 100 Gew.-% entweder nur Wasser oder vorwiegend Wasser mit Gehalten an mindestens einem organischen Lösemittel oder/und an mindestens einem Lösungsvermittler sind. Vorzugsweise wird die wässerige Schmierstoffzusammensetzung vor ihrer Applikation auf der metallischen Oberfläche in Bewegung gehalten.

Die wässerige Schmierstoffzusammensetzung kann bei Verwendung als sogenanntes Konzentrat einen Feststoff- und Wirkstoffgehalt vorzugsweise im Bereich von 12 bis 95, 20 bis 85, 25 bis 70 oder 30 bis 55 Gew.-% aufweisen, als Applikationsgemisch ("Bad") vorzugsweise im Bereich von 4 bis 70, 5 bis 50, 10 bis 30 oder 15 bis 22 Gew.-%. Bei geringen Konzentrationen kann der Zusatz von mindestens einem Verdicker vorteilhaft sein.

Bei dem erfindungsgemäßen Verfahren können die kalt umzuformenden metallischen Formkörper mit der Schmierstoffzusammensetzung vorzugsweise über eine Zeit von 0,1 Sekunde bis 1 Stunde benetzt werden. Die Benetzungsdauer kann von der Art, Form und Größe der metallischen Formkörper sowie von der gewünschten Schichtdicke des herzustellenden Überzugs abhängen, wobei z.B. lange Rohre oft schräg in die Schmierstoffzusammensetzung eingebracht werden, damit die Luft über längere Zeit insbesondere im Rohrinneren entweichen kann. Die Applikation der wässerigen Schmierstoffzusammensetzung auf dem Werkstück kann mit allen in der Oberflächentechnik üblichen Methoden erfolgen, beispielsweise durch manuellen oder/und automatisierten Auftrag, durch Spritzen oder/und Tauchen und gegebenenfalls zusätzlich durch Abquetschen oder/und Aufwalzen, gegebenenfalls in einem Durchlauftauchverfahren.

Um die Schmierstoffzusammensetzung zu optimieren, ist besondere Beachtung zu richten auf die Einstellung des pH-Werts, auf die Viskosität bei den auftretenden erhöhten Temperaturen sowie auf die Auswahl der zuzusetzenden Substanzen für abgestufte Erweichungsbereiche/Erweichungspunkte oder/und Schmelzbereiche/Schmelzpunkte der verschiedenen Komponenten der Schmierstoffzusammensetzung.

Hierbei können die kalt umzuformenden metallischen Formkörper mit der Schmierstoffzusammensetzung bei einer Temperatur vorzugsweise im Bereich von Raumtemperatur bis 95 °C, insbesondere bei 50 bis 75 °C, benetzt werden. Wenn die Temperatur beim Benetzen des metallischen Formkörpers unter 45 °C liegt, verläuft die Trocknung üblicherweise ohne zusätzliche Maßnahmen wie z.B. stärkeres Umspülen mit warmer Luft oder Behandlung mit Strahlungswärme sehr langsam; außerdem kann bei zu langsamer Trocknung eine Oxidation der metallischen Oberfläche, insbesondere ein Anrosten wie z.B. Flash Rust, auftreten.

Hierbei bildet sich ein Überzug aus der Schmierstoffzusammensetzung aus, dessen chemische Zusammensetzung nicht in jeder Variante mit der Ausgangszusammensetzung und dem Phasengehalt der wässerigen Schmierstoffzusammensetzung übereinstimmen muss, aber in sehr vielen Ausführungsvarianten weitgehend oder vollständig übereinstimmt. In den meisten Ausführungsvarianten treten kaum oder keine Vernetzungsreaktionen auf. Denn es handelt sich in den meisten Ausführungsformen vorwiegend oder gänzlich um ein Auftrocknen der wässerigen Schmierstoffzusammensetzung auf der metallischen Oberfläche.

Vorzugsweise werden die zugegebenen Substanzen so ausgewählt, dass die Erweichungsbereiche/Erweichungspunkte oder/und Schmelzbereiche/Schmelzpunkte der einzelnen polymeren Bestandteile (Monomere, Comonomere, Oligomere, Cooligomere, Polymere oder/und Copolymere des polymeren organischen Materials), gegebenenfalls auch der Wachse und gegebenenfalls mitwirkender Additive über den Temperaturbereich verteilen, der durch die Eckwerte Umgebungstemperatur oder erhöhte Temperatur im Bereich von 20, 50, 100, 150 oder 200 °C bis 150, 200, 250, 300, 350 oder 400 °C begrenzt wird. Durch die Verteilung der Erweichungsbereiche/Erweichungspunkte oder/und Schmelzbereiche/Schmelzpunkte der einzelnen organischen polymeren Bestandteile z.B. über 20 bis 150 °C, über 30 oder 80 oder 120 bis 200 °C, über 50 oder 100 oder 150 bis 300 °C wird die Reibung in jedem Temperaturbereich, der beim Kaltumformen durchlaufen wird, durch jeweils mindestens eine erweichte oder/und geschmolzene Substanz erleichtert und dadurch wird üblicherweise auch das Kaltumformen gewährleistet.

### Überzüge:

Die mit der erfindungsgemäßen Schmierstoffzusammensetzung hergestellte Schmierstoffschicht (= Überzug) weist typischerweise eine Zusammensetzung auf, die weitgehend bis vollständig mit der Zusammensetzung der wässerigen Schmierstoffzusammensetzung identisch ist, wenn vom Gehalt an Wasser, gegebenenfalls an organischem Lösemittel und gegebenenfalls an weiteren abdampfenden Bestandteilen sowie von der gegebenenfalls auftretenden Kondensation, Vernetzung oder/und chemischen Reaktionen abgesehen wird.

Üblicherweise ist der mit den erfindungsgemäßen Schmierstoffzusammensetzungen erzeugte Überzug dafür gedacht, die Kaltumformung zu erleichtern und danach vom umgeformten Werkstück entfernt zu werden. In besonderen Ausführungsformen wie z.B. bei Achsen und Lenkungsteilen kann die erfindungsgemäße Zusammensetzung so ausgestaltet sein, dass der Überzug für einen dauerhaften Verbleib auf einem umgeformten Werkstück besonders geeignet ist, z.B. durch Verwendung eines Gehalts an mindestens einem Härter für eine thermische Vernetzung, an mindestens einem Harz, das für eine radikalische Härtung wie z.B. eine UV-Härtung geeignet ist, an mindestens einem Photoinitiator z.B. für eine UV-Härtung oder/und an mindestens einem Filmbildungshilfsmittel, um einen besonders hochwertigen und in vielen Varianten geschlossenen Überzug zu erzeugen. Die gehärteten, vernetzen oder/und nachvernetzten Überzüge können eine erhöhte Korrosionsbeständigkeit und Härte im Vergleich zu den Überzügen der übrigen Ausführungsformen darstellen.

Als besonders hochwertige Überzüge für höhere oder für die höchsten mechanischen oder/und thermischen Anforderungen haben sich die erwiesen, bei denen der flüssige, eintrocknende oder/und trockene Überzug, der mit der erfindungsgemäßen wässerigen Schmierstoffzusammensetzung aufgebracht wurde, bis zu Temperaturen von mindestens 200 °C kein stärkeres Erweichen oder/und nur ein begrenztes Erweichen oder kein Erweichen bis mindestens 300 °C zeigt.

Für das Drahtziehen hat es sich als vorteilhaft erwiesen, wenn bei den Oberflächentemperaturen des Drahtes beim Drahtziehen ein Erweichen oder/und Schmelzen auftritt, weil sich dann gleichmäßige schöne fusselfreie metallische Oberflächen ergaben. Entsprechendes gilt für andere Gleitziehverfahren und für leichtes bis mittleres Kaltfließpressen.

Der aus der wässerigen Schmierstoffzusammensetzung aufgebrachte Überzug hat vorzugsweise ein Schichtgewicht im Bereich von 0,3 bis 15 g/m², insbesondere von 1 bis 12, von 2 bis 9 oder von 3 bis 6 g/m². Die Schichtdicke des Überzugs wird entsprechend den Anwendungsbedingungen eingestellt und kann hierbei insbesondere in einer Dicke im Bereich von 0,25 bis 25 µm vorliegen, vorzugsweise im Bereich von 0,5 bis 20, von 1 bis 15, von 2 bis 10, von 3 bis 8 oder von 4 bis 6 µm.

Als umzuformende Werkstücke werden meistens Bänder, Bleche, Butzen (= Drahtabschnitte, Profilabschnitte, Ronden oder/und Rohrabschnitte), Drähte, Hohlprofile, Vollprofile, Stäbe, Rohre oder/und komplizierter geformte Formteile eingesetzt.

Die kalt umzuformenden metallischen Formkörper können grundsätzlich aus jedem metallischen Material bestehen. Vorzugsweise bestehen sie im Wesentlichen aus Stahl, Aluminium, Aluminium-Legierung, Kupfer, KupferLegierung, Magnesium-Legierung, Titan, Titan-Legierung, insbesondere aus Baustahl, hochfestem Stahl, Edelstahl oder/und metallisch beschichtetem Stahl wie z.B. aluminiertem oder verzinktem Stahl. Meistens besteht das Werkstück im Wesentlichen aus Stahl.

Bei Bedarf können die metallischen Oberflächen der kalt umzuformenden metallischen Werkstücke oder/und die Oberflächen ihres metallisch beschichteten Überzugs vor der Benetzung mit der wässerigen Schmierstoffzusammensetzung in mindestens einem Reinigungsverfahren gereinigt werden, wobei grundsätzlich alle Reinigungsverfahren hierzu geeignet sind. Das chemische oder/und physikalische Reinigen kann vor allem ein Schälen, Strahlen wie z.B. Glühen, Sandstrahlen, mechanisches Entzundern, alkalisches Reinigen oder/und saures Beizen umfassen. Vorzugsweise erfolgt das chemische Reinigen durch Entfetten mit organischen Lösemittein, durch Reinigen mit alkalischen oder/und sauren Reinigern, mit sauren Beizen oder/und durch Spülen mit Wasser. Das Beizen oder/und Strahlen wird vor allem zum Entzundern der metallischen Oberflächen eingesetzt. Hierbei ist es bevorzugt, z.B. ein geschweißtes Rohr aus Kaltband nach dem Schweiβen und Schaben nur noch zu glühen, z.B. ein nahtloses Rohr zu beizen, zu spülen und zu neutralisieren bzw, z.B. einen Edelstahlbutzen zu entfetten und zu spülen. Teile aus Edelstahl können sowohl feucht, als auch trocken mit der Schmierstoffzusammensetzung in Kontakt gebracht werden, da ein Rosten nicht zu erwarten ist.

Die kalt umzuformenden metallischen Formkörper können bei Bedarf vor der Benetzung mit der erfindungsgemäßen Schmierstoffzusammensetzung vorbeschichtet werden. Die metallische Oberfläche des Werkstücks kann bei Bedarf vor der Benetzung mit der erfindungsgemäßen Schmierstoffzusammensetzung mit einer metallischen Beschichtung versehen werden, die im Wesentlichen aus einem Metall oder aus einer Metalliegierung besteht (z.B. aluminiert oder verzinkt). Andererseits kann die metallische Oberfläche des Werkstücks oder ihr metallisch beschichteter Überzug mit einer Konversionsbeschichtung versehen werden, insbesondere oxalatiert oder phosphatiert werden. Die Konversionsbeschichtung kann vorzugsweise mit einer wässerigen Zusammensetzung auf Basis von Oxalat, Alkaliphosphat, Calciumphosphat, Magnesiumphosphat, Manganphosphat, Zinkphosphat oder entsprechendem Mischkristall-Phosphat wie z.B. ZnCa-Phosphat erfolgen. Oft werden die metallischen Formkörper auch blank, das heißt ohne eine vorherige Konversionsbeschichtung, mit der erfindungsgemäßen Schmierstoffzusammensetzung benetzt werden. Letzteres ist aber nur möglich, wenn die metallische Oberfläche des umzuformenden Werkstücks vorher chemisch oder/und physikalisch gereinigt wird.

Die metallischen Formkörper werden nach dem Beschichten mit der Schmierstoffzusammensetzung vorzugsweise gut durchgetrocknet, insbesondere mit warmer Luft oder/und Strahlungswärme. Das ist oft erforderlich, weil in der Regel Wassergehalte in Überzügen beim Kaltumformen stören, weil sonst der Überzug unzureichend ausgebildet werden kann oder/und weil ein Überzug von schlechterer Qualität ausgebildet werden kann. Hierbei kann auch ein Anrosten schnell auftreten.

Überraschenderweise ist der erfindungsgemäße Überzug bei ausreichender Trocknung von so guter Qualität, dass sie bei vorsichtiger Handhabung der metallischen beschichteten Formkörper nicht beschädigt und auch nicht teilweise abgetragen wird.

Die erfindungsgemäß beschichteten metallischen Formkörper können zur Kaltumformung verwendet werden, insbesondere zum Gleitziehen z.B. von Rohren, Hohlprofilen, Stäben, anderen Vollprofilen oder/und Drähten, zum Abstreckziehen oder/und Tiefziehen z.B. von Bändern, Blechen oder/und Hohlkörpern z.B. zu Hohlkörpern, zum Kaltfließpressen z.B. von Hohl- oder/und Vollkörpern oder/und zum Kaltstauchen z.B. von Drahtabschnitten zu Verbindungselementen wie z.B. zu Bolzen oder/und Schrauben-Rohlingen, wobei teilweise auch mehrere, gegebenenfalls auch verschiedenartige, Kaltumformvorgänge nacheinander ausgeführt werden können.

Bei dem erfindungsgemäßen Verfahren kann das umgeformte Werkstück nach der Kaltumformung vorzugsweise zumindest teilweise von dem verbliebenen Überzug oder/und von den Ablagerungen der Schmierstoffzusammensetzung gereinigt werden.

Bei dem erfindungsgemäßen Verfahren kann der Überzug auf dem umgeformten Werkstücke bei Bedarf nach der Kaltumformung zumindest teilweise auf Dauer verbleiben.

Die Aufgabe wird ebenfalls gelöst mit einer erfindungsgemäßen Schmierstoffzusammensetzung zum Aufbringen auf ein umzuformendes Werkstück und zum Kaltumformen.

Die Aufgabe wird auch gelöst mit einem Überzug, der aus einer erfindungsgemäßen Schmierstoffzusammensetzung gebildet wurde.

Sie betrifft auch die Verwendung einer erfindungsgemäßen Schmierstoffzusammensetzung zum Aufbringen auf ein umzuformendes Werkstück und zum Kaltumformen sowie die Verwendung eines erfindungsgemäßen Überzugs zum Kaltumformen und gegebenenfalls auch als dauerhafte Schutzbeschichtung.

Es wurde überraschend gefunden, dass bereits ein sehr kleiner Zusatz von einem wasserlöslichen, wasserhaltigen oder/und wasserbindenden Oxid oder/und Silicat, insbesondere von Wasserglas, aber ebenso auch ein hoher Zusatz zu einer deutlichen Verbesserung des erfindungsgemäßen Überzugs führt, der zu einer deutlich verbesserten Kaltumformung unter ansonsten gleichen Bedingungen führt und bei stärkerer Kaltumformung genutzt werden kann als bei vergleichbaren, von diesen Verbindungen freien Schmierstoffzusammensetzungen. Darüber hinaus kann der erfindungsgemäße Überzug auch bei Kaltumformungen bei höherer Krafteinwirkung und bei höherer Temperatur ohne Zusatz von Festschmierstoffen und ohne Aufbringen einer separaten Festschmierstoffschicht eingesetzt werden als vergleichbare Überzüge ohne diesen Zusatz. Ferner hat dieser Zusatz auch eine deutliche korrosionsschützende Wirkung.

Überraschenderweise wurde auch gefunden, dass das Kaltfließpressen - insbesondere von Stahlbutzen - entsprechend der Erfindung besonders reibungsarm und vor allem ohne Bruch des Werkzeugs selbst bei Verwendung von deutlich erhöhten Kräften erfolgte. Somit ist es möglich, sowohl für den Bereich der extremen Preßdrucke, als auch für den Bereich höchster Verschleißminimierung beim Kaltumformen, erhöhter Ausformgenauigkeit oder/und erhöhter Umformgeschwindigkeit Überzüge herzustellen, die im Eintopfverfahren z.B. durch Tauchen, Herausziehen und Trocknen einfach, reproduzierbar und kostengünstig angewendet werden können.

### Erfindungsctemäße Beispiele und Vergleichsbeispiele:

Es wurde ein wässeriges Schmierstoffkonzentrat unter kräftigem Rühren mit einem Dissolver angesetzt, wobei zuerst vollentsalztes Wasser und gegebenenfalls ein Zusatz von einem Neutralisationsmittel wie z.B. einem Aminalkohol vorgelegt wurde. Einerseits wurden dabei Zusammensetzungen (A) mit einem Aminalkohol angesetzt, die anfangs bei Temperaturen im Bereich von 80 bis 95 °C gehalten wurden, andererseits wurden Zusammensetzungen (B) mit einem Ammoniumgehalt angesetzt, die die gesamte Zeitdauer bei Raumtemperatur oder/und bei bis zu 30 °C gehalten wurden. Die Gehalte an Aminalkohol bzw. Ammoniumionen dienten der Neutralisation (= Bildung eines organischen Salzes) bzw. dem Erhalt von organischen Salzen in der wässerigen Zusammensetzung.

Bei den Schmierstoffzusammensetzungen (A) und (B) als Gemische, Schmierstoffkonzentrate und Bäder wurde grundsätzlich gleichartig verfahren. Zuerst wurde dem vorgelegten Wasser das mindestens eine lonomer auf Basis von Ethylenacrylat zugesetzt, teilweise als Dispersion. Hierzu wurde das Gemisch (A) weiter bei Temperaturen im Bereich von 80 bis 95 °C gehalten und weiter kräftig mit einem Dissolver gerührt, um die Neutralisation und Salzbildung zu ermöglichen. Hierbei ergab sich nach einiger Zeit eine transparente Flüssigkeit. Bei den Gemischen (B) wurde das mindestens eine lonomer auf Basis von Ethylenacrylat in der Form von mindestens einer Dispersion von mindestens einem organischen Ammoniumsalz zugesetzt und weiter kräftig mit einem Dissolver gerührt. Danach wurden den Gemischen (A) und (B) die Nicht-Ionomere zuerst in gelöster oder/und dispergierter Form und danach in pulveriger Form unter kräftigem und lange andauerndem Rühren mit einem Dissolver zugesetzt. Hierzu wurde bei den Gemischen (A) die Temperatur wieder auf den Bereich von 60 bis 70 °C abgesenkt. Weiterhin wurden je nach Bedarf die weiteren Additive wie Biozid, Netzmittel und Korrosionsschutzmittel und schließlich mindestens ein Verdicker zum Einstellen der Viskosität zugesetzt. Bei Bedarf wurde das jeweilige Konzentrat filtriert und der pH-Wert eingestellt. Zur Beschichtung der umzuformenden metallischen Werkstücke wurde das jeweilige Konzentrat entsprechend mit vollentsalztem Wasser verdünnt und bei Bedarf der pH-Wert eingestellt. Die Bäder mit der wässerigen Schmierstoffzusammensetzung wurden auf Dauer leicht gerührt und bei einer Temperatur im Bereich von 50 bis 70 °C (Bäder A) oder von 15 bis 30 °C (Bäder B) gehalten.

Dann wurden Butzen aus gehärtetem Kohlenstoffstahl C15,1.0401 von 90-120 HB von ca. 20 mm Durchmesser und ca. 20 mm Höhe mit ZnCa-Phosphat mit einem Zink-Kalzium-Verhältnis von 70 : 30 nicht-elektrolytisch (= stromlos) phosphatiert. Die Beschichtung der phosphatierten Butzen mit der polymeren und meistens erfindungsgemäßen wässerigen Schmierstoffzusammensetzung erfolgte durch Tauchen über 1 min und anschließendes Trocknen über 10 min bei 60 bis 65 °C im Umluftschrank. Diese zweifach beschichteten getrockneten Butzen wurden dann in einer Presse durch Rückwärtsfließpressen bei 300 t kalt umgeformt.

In den Tabellen werden die Schmierstoffzusammensetzungen und die Eignung der hiermit gebildeten Überzüge auf ZnCa-Phosphat-Beschichtungen für bestimmte Kaltumformvorgänge und ihren Umformgrad angegeben. Den Rest auf 100 Gew.-% bilden die Additive und Festschmierstoffe, wobei nur letztere angeführt werden. Als lonomere wurden Ethylenacrylate oder/und Ethylenmethacrylate ("Ethylenacrylat") eingesetzt. Mit "Ammonium-Polymer" werden organische polymere Ammonium-Salze der Nicht-Ionomere, die als Dispersionen zugesetzt wurden, bezeichnet. Unter den Additiven werden nur die Festschmierstoffe angeführt, weshalb die Summe der Fest- und Wirkstoffe keine 100 Gew.-% ergibt. Die lonomere der Typen A und C haben ein etwas höheres Molekulargewicht und eine deutlich höhere Schmelzviskosität (Viskosität bei hoher Temperatur insbesondere im Bereich des Erweichens oder/und Schmelzens) als die lonomere der Typen B und D. Die lonomere der Typen A und B wurden bei der Herstellung der wässerigen Schmierstoffzusammensetzung mit einem Aminalkohol reagiert. Die lonomere der Typen C und D weisen einen Ammoniumgehalt auf und wurden bereits als organische Salze zugesetzt.

Tabellen 1: Zusammensetzungen der wässerigen Schmierstoffzusammensetzungen mit Angaben in Gew.-% der Fest- und Wirkstoffe und der Eignung der hiermit gebildeten Überzüge auf ZnCa-Phosphat-Beschichtungen für bestimmte Kaltumformvorgänge und ihren Umformgrad für verschiedenste Grundzusammensetzungen mit einem variierenden Gehalt an Wachs mit unterschiedlichem Umformungsgrad

Kaltumformvorgänge: AZ = Abstreckziehen, GZ = Gleitziehen, HF = Hydroforming, KFP = Kaltfließpressen, KS = Kaltstauchen, TP = Taumelpressen, TZ = Tiefziehen
Festschmierstoffe: G = Graphit, M = Molybdändisulfid
* = herausgerechneter und ggf. überschüssiger Anteil, so dass die Summe über 100 Gew.-% liegt, da zumindest ein Teil der lonomere und Nichtlonomere als Salz vorliegt
** = lonomer

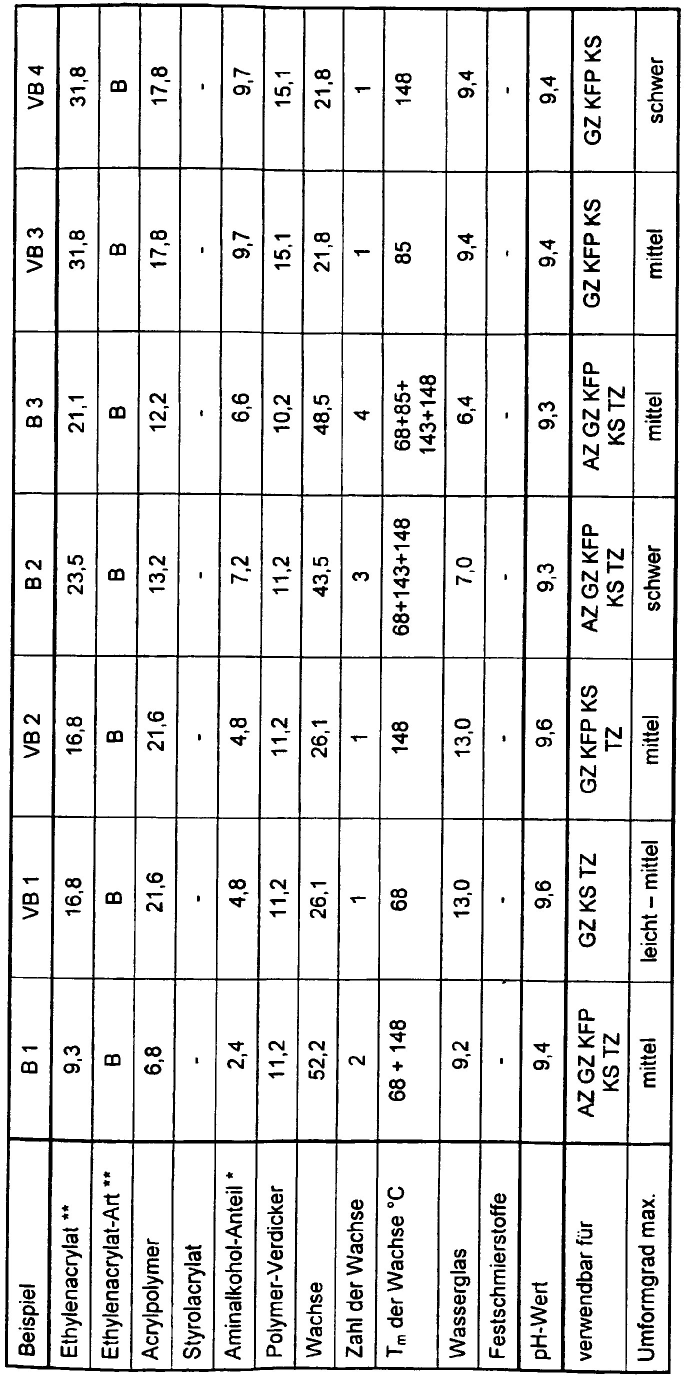

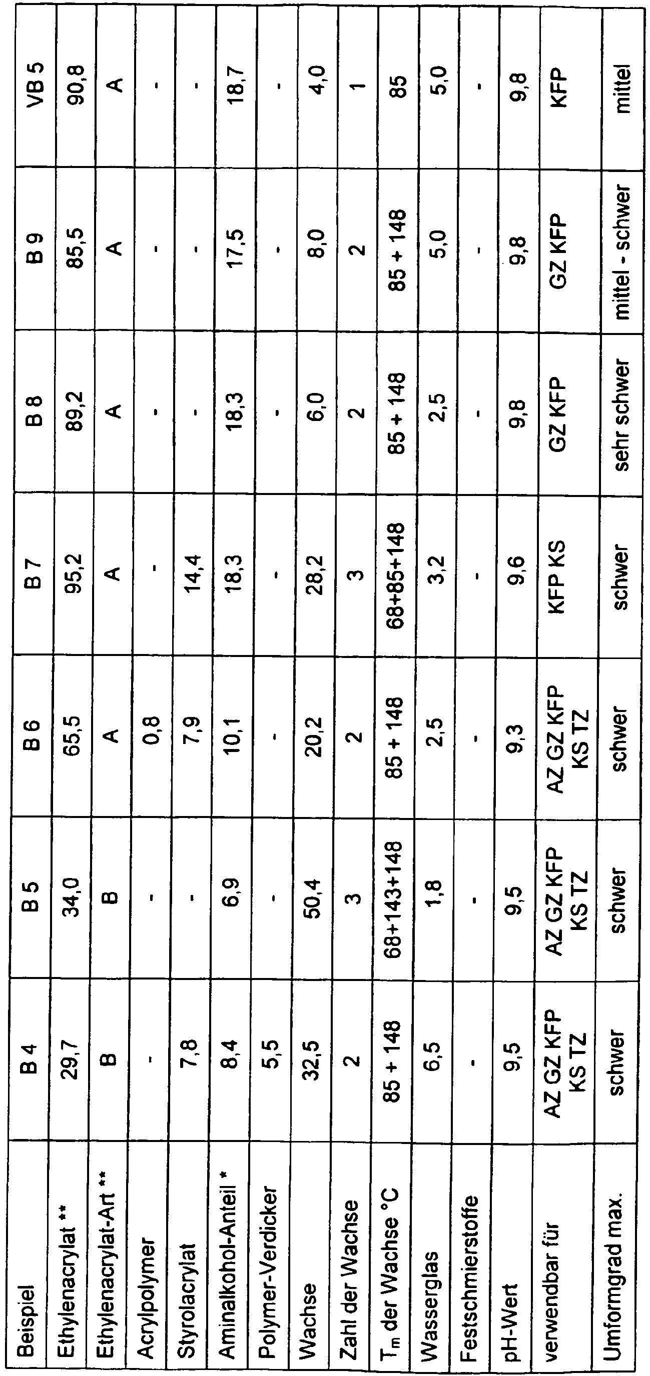

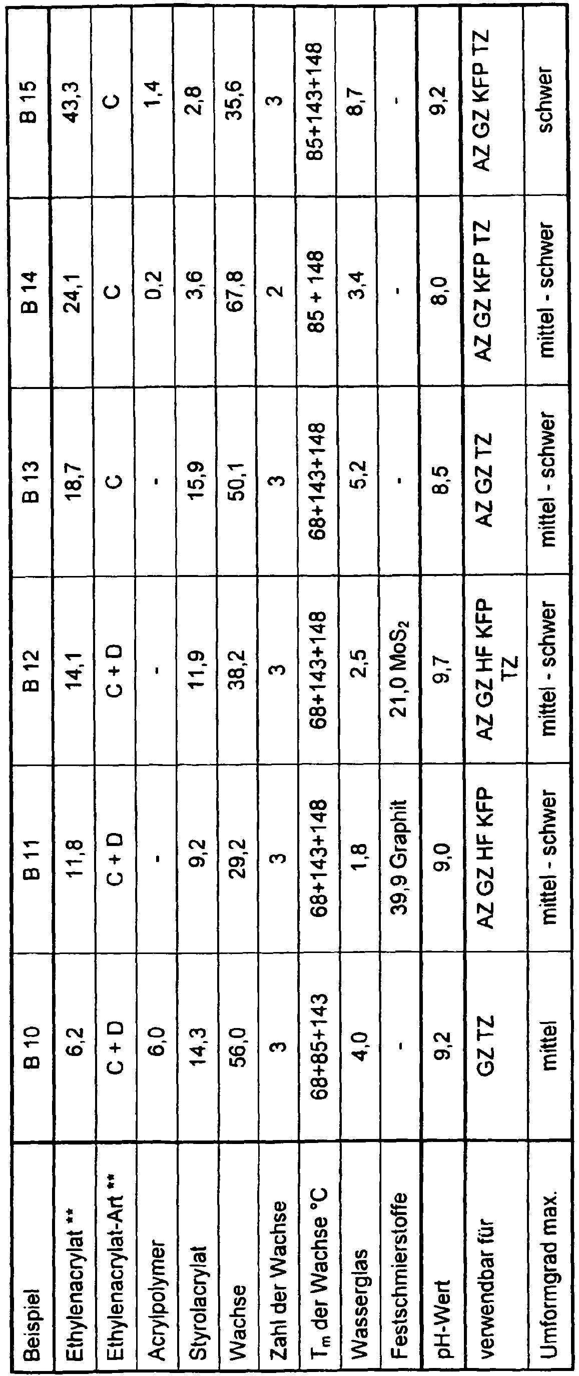

Bei den Versuchen der Tabellen zeigte sich, dass der Gehalt der erfindungsgemäßen Schmierstoffzusammensetzungen an verschiedenen Komponenten in breitem Ausmaß variiert werden kann. Hierbei hat sich einerseits der Zusatz von mindestens zwei Wachsen mit abgestuften Schmelztemperaturen oder/und unterschiedlichen Viskositäten, aber auch von mindestens einem lonomer oder/und von Wasserglas besonders bewährt. Im Wesentlichen sind die Schmierstoffzusammensetzung und der hieraus gebildete Überzug eher oder besser für schwere Umformungen einsetzbar, wenn ein höherer Gehalt an lonomer(en) oder ein zusätzlicher hoher Gehalt an mindestens einem Festschmierstoff enthalten ist. Aber bei den weitaus meisten Ausführungsformen ist ein Gehalt an mindestens zwei Wachsen besonders vorteilhaft oder sogar erforderlich. Die Schmierstoffzusammensetzungen der Beispiele 11 und 12 sind aufgrund des Gehalts an Graphit bzw. Molybdändisulfid für eine schwere Kaltumformung wie das Taumelpressen besonders geeignet.

Es zeigte sich, dass der Einsatz von mindestens zwei Wachsen mit deutlich unterschiedlichen physikalischen Eigenschaften besonders vorteilhaft ist und eine erhebliche Verbesserung für das Kaltumformen brachte. Wenn zwei Wachse von ähnlichem oder nahe beieinander liegendem Schmelzbereich/Schmelzpunkt verwendet wurden, hatten diese eine deutlich unterschiedliche Viskosität. Die Viskosität der beiden niedrig-schmelzenden Wachse und der beiden hoch-schmelzenden Wachse war bei der erhöhten bzw. hohen Temperatur des Kaltumformens um mindestens 10 % unterschiedlich, bei den beiden hoch-schmelzenden Wachsen wahrscheinlich um mindestens 20 %. Hierbei hat sich einerseits der Zusatz von mindestens einem lonomer und gegebenenfalls auch von Wasserglas, aber auch von zwei, drei oder vier Wachsen mit abgestuften Schmelzbereichen/Schmelzpunkten als sehr vorteilhaft erwiesen. Wenn dabei zwei Wachse von ähnlichem oder nahe beieinander liegendem Schmelzbereich/Schmelzpunkt verwendet wurden, hatten diese eine deutlich unterschiedliche Viskosität, so dass die Viskosität der Schmierstoffzusammensetzung bei hoher Temperatur variiert und bezüglich der jeweiligen Umform- und Anwendungsbedingungen optimiert werden konnte.

Die erfindungsgemäßen Schmierstoffzusammensetzungen ermöglichen umweltfreundliche Überzüge, die auf einfache und kostengünstige Weise auf metallischen Werkstücken aufgebracht und für einfache, mittelschwere oder/und besonders schwere Kaltumformungen geeignet sind. Aufgrund des Einsatzes von organischen Salzen können die Überzüge und entsprechende Ablagerungen nach der Kaltumformung vom umgeformten Werkstück auf einfache Weise entfernt werden.

## Patentansprüche

1. Verfahren zur Vorbereitung von metallischen Werkstücken zum Kaltumformen durch Aufbringen einer Schmierstöffschicht, die im Folgenden auch als Überzug bezeichnet wird, entweder auf eine metallische Oberfläche oder auf eine vorbeschichtete metallische Oberfläche, **dadurch gekennzeichnet, dass** die Schmierstoffschicht durch Kontaktieren der Oberfläche mit einer wässerigen Schmlerstoffzusammensetzung ausgebildet wird,
die einen Gesamtgehalt an mindestens zwei Wachsen im Bereich von 5 bis 60 Gew-% der Fest- und Wirkstoffe aufweist,
dass der aus der Schmierstoffzusammensetzung gebildete Überzug über einen größeren Temperaturbereich, der durch das Kaltumformen beim Aufheizen des metallischen Werkstücks durchlaufen wird, mehrere aufeinander folgende Erweichungsbereiche/Erweichungspunkte oder/und Schmelzbereiche/Schmelzpunkte aufweist, so dass sich eine im Wesentlichen kontinuierliche Änderung der eine näherungsweise abgestufte Änderung der thermischen oder/und mechanischen Eigenschaften oder/und der Viskosität der Überzüge beim Kaltumformen ergibt, wobei mindestens ein niedrig-schmeizendes Wachs mit mindestens einem hoch-schmelzenden Wachs in der Schmierstoffzusammensetzung oder/und im hieraus gebildeten Überzugs enthalten sind, deren Schmelzbereiche/Schmelzpunkte Tₘ mindestens 30 °C auseinander liegen, und wobei die aus den Schmierstoffzusammensetzungen gebildeten Überzüge mit einem Gehalt an mindestens zwei Wachsen über den Temperaturbereich von 40 bis 260 °C insgesamt mindestens zwei Bereiche oder/und Peaks des Schmelzens aufweisen, von denen mindestens zwei mindestens 30 °C auseinander liegen, und
dass die wässerige Schmierstoffzusammensetzung außerdem einen Gehalt an organischem polymeren Material auf Basis von lonomer, Acrylsäure/Methacrylsäure, Epoxid, Ethylen, Polyamid, Propylen, Styrol, Urethan, deren Ester(n) oder/und deren Salz(en) sowie einen Gehalt an wasserlöslichem, wasserhaltigem oder/und wasserbindendem Oxid oder/und Silicat ausgewählt aus jeweils mindestens einem Wasserglas im Bereich von 0,1 bis 85 Gew.-% enthält, wobei der Gehalt an mindestens einem Ionomer im Bereich von 5 bis 90 Gew.-% liegt, jeweils bezogen auf Fest- und Wirkstoffe.

2. Verfahren nach Anspruch 1, **dadurch gekennzeichnet, dass** die Schmierstoffzusammensetzung oder/und der hieraus gebildete Überzug einen Gehalt an mindestens einem wasserlöslichen, wasserhaltigen oder/und wasserbindenden Oxid oder/und Silicat sowie einen Gehalt an mindestens einem lonomer, an mindestens einem weiteren organischen polymeren Bestandteil, der nicht als lonomer anzusehen ist, wie z.B. Oligomere, Polymere oder/und Copolymere auf Basis von Acrylsäure/Methacrylsäure, Amid, Amin, Aramid, Epoxid, Ethylen, imid, Polyester, Propylen, Styrol, Urethan, deren Ester oder/und deren Salz(e), oder/und einen Gehalt an mindestens zwei Wachsen sowie gegebenenfalls einen Gehalt an mindestens einem Additiv enthält/enthalten.

3. Verfahren nach Anspruch 1 oder 2, **dadurch gekennzeichnet, dass** die Ionomere im Wesentlichen aus ionomeren Copolymeren Gegebenenfalls zusammen mit entsprechenden Ionen, Monomeren, Comonomeren, Oligomeren, Cooligomeren, Polymeren, deren Estern oder/und deren Salzen bestehen.

4. Verfahren nach einem der vorstehenden Ansprüche, **dadurch gekennzeichnet, dass** die Schmierstoffzusammensetzung oder/und der hieraus gebildete Überzug einen Gehalt an mindestens einem weiteren organisehen polymeren Bestandteil, der nicht als lonomer anzusehen ist, im Bereich von 0,1 bis 90 Gew.-% der Fest- und Wirkstoffe aufweist/aufweisen.

5. Verfahren nach einem der vorstehenden Ansprüche, **dadurch gekennzeichnet, dass** mindestens ein lonomer oder/und mindestens ein welterer organischer polymerer Bestandteil, der nicht als Ionomer anzusehen ist, zumindest teilweise neutralisiert wird, zumindest teilweise verseift wird oder/und zumindest teilweise als mindestens ein organisches Salz in der Schmierstoffzusammensetzung oder/und im Überzug vorliegt.

6. Verfahren nach einem der vorstehenden Ansprüche, **dadurch gekennzeichnet, dass** für die Neutralisation der Schmierstoffzusammensetzung jeweils mindestens ein primäres, sekundäres oder/und tertiäres Amin, Ammoniak oder/und mindestens ein Hydroxid als Neutralisationsmittel verwendet wird, insbesondere mindestens ein Aminalkohol.

7. Verfahren nach einem der vorstehenden Ansprüche, **dadurch gekennzeichnet, dass** die Schmierstoffzusammensetzung oder/und der hieraus gebildete Überzug mindestens zwei Wachse, insbesondere jeweils mindestens ein Paraffinwachs, ein Carnaubawachs, ein Silikonwachs, ein Amidwachs, ein Ethylen- oder/und ein Propylen-basiertes Wachs oder/und ein kristallines Wachs enthält/enthalten.

8. Verfahren nach einem der vorstehenden Ansprüche, **dadurch gekennzeichnet, dass** in den Schmierstoffzusammensetzungen oder/und den hieraus gebildeten Überzügen Wachse eingesetzt werden, deren Viskositäten bei einer bestimmten erhöhten oder hohen Temperatur im Bereich der Oberflächen-Temperaturen des umzuformenden Werkstücks beim Kaltumformen um mindestens 5 % in ihrer Viskosität unterschiedlich sind.

9. Verfahren nach einem der vorstehenden Ansprüche, **dadurch gekennzeichnet, dass** die Schmierstoffzusammensetzungen oder/und die hieraus gebildeten Überzüge mindestens zwei Arten an organischen polymeren Substanzen ausgewählt aus lonomeren und weiteren organischen polymeren Bestandteilen, die nicht als lonomer anzusehen sind, enthalten, die über den Temperaturbereich von 40 bis 260 °C insgesamt mindestens zwei Bereiche oder/und Peaks des Erweichens oder/und des Schmelzens aufweisen, von denen mindestens zwei mindestens 30 °C auseinander liegen.

10. Verfahren nach einem der vorstehenden Ansprüche, **dadurch gekennzeichnet, dass** der aus der Schmierstoffzusammensetzung gebildete Überzugs über einen größeren Temperaturbereich, der durch das Kaltumformen beim Aufheizen des metallischen Werkstücks durchlaufen wird, mehrere aufeinander folgende Erweichungsbereiche/Erwelchungspunkte oder/und Schmelzbereiche/Schmelzpunkte aufweist, bei der sich eine im Wesentlichen kontinuierliche Änderung oder eine näherungsweise abgestufte Änderung der thermischen oder/und mechanischen Eigenschaften oder/und der Viskosität der Überzüge beim Kaltumformen ergibt.

11. Verfahren nach einem der vorstehenden Ansprüche, **dadurch gekennzeichnet, dass** die aus den Schmierstoffzusammensetzungen gebildeten Überzüge mit einem Gehalt an mindestens zwei Wachsen über den Temperaturbereich von 40 bis 129 °C und von 130 bis 260 °C jeweils mindestens einen Bereich oder/und Peak des Schmelzens aufweisen.

12. Verfahren nach einem der vorstehenden Ansprüche, **dadurch gekennzeichnet, dass** die Schmierstoffzusammensetzung oder/und der hieraus gebildete Überzug mindestens ein Additiv ausgewählt aus der Gruppe bestehend aus Festschmierstoffen, Reibwertminderern, verschleißschützenden Additiven, Silan-Zusätzen, Elastomeren, Filmbildungshilfsmitteln, Korrosionsschutzmitteln, Tensiden, Entschäumern, Verlaufsmitteln, Bioziden, Verdickern und organischen Lösemitteln enthält/enthalten.

13. Verfahren nach einem der vorstehenden Ansprüche, **dadurch gekennzeichnet, dass** das umgeformte Werkstück nach der Kaltumformung zumindest teilweise von dem verbliebenen Überzug oder/und von den Ablagerungen der Schmierstoffzusammensetzung gereinigt wird.

14. Verfahren nach einem der Ansprüche 1 bis 12, **dadurch gekennzeichnet, dass** der Überzug auf dem umgeformten Werkstücke nach der Kaltum-formung zumindest teilweise auf Dauer verbleib.

15. Schmierstoffzusammensetzung zum Aufbringen auf ein umzuformendes Werkstück und zum Kaltumformen nach einem der Ansprüche 1 bis 14.

16. Überzug, der aus einer Schmierstoffzusammensetzung nach Anspruch 15 gebildet wird/wurde.

17. Verwendung einer Schmierstoffzusammensetzung nach Anspruch 15 zum Aufbringen auf ein umzuformendes Werkstück und zum Kaltumformen.

## Claims

1. A process for the preparation of metallic workpieces for cold forming by applying a lubricant layer, which is also referred to as a coating in the following, either to a metallic surface or to a pre-coated metallic surface, **characterised in that** the lubricant layer is formed by contacting the surface with an aqueous lubricant composition,
which has a total content of at least two waxes in the range from 5 to 60 wt.% of the solids and active substances,
the coating formed from the lubricant composition has several consecutive softening ranges/softening points and/or melting ranges/melting points over a relatively large temperature range, which is passed through when the metallic workpiece heats up as a result of the cold forming, so that there is a substantially continuous change or an approximately graduated change in the thermal and/or mechanical properties and/or the viscosity of the coatings during cold forming, wherein at least one low-melting-point wax and at least one high-melting-point wax are contained in the lubricant composition and/or in the coating formed therefrom, the melting ranges/melting points Tₘ of which are at least 30 °C apart, and wherein the coatings formed from the lubricant compositions with a content of at least two waxes have a total of at least two ranges and/or peaks of melting over the temperature range from 40 to 260 °C, at least two of which are at least 30 °C apart, and
the aqueous lubricant composition has, moreover, a content of organic polymeric material based on ionomer, acrylic acid/methacrylic acid, epoxide, ethylene, polyamide, propylene, styrene, urethane, ester(s) thereof and/or salt(s) thereof, as well as a content of water-soluble, water-containing and/or water-binding oxide and/or silicate, selected from, in each case, at least one water glass in the range from 0.1 to 85 wt.%, wherein the content of at least one ionomer lies in the range from 5 to 90 wt.%, in each case based on solids and active substances.

2. A process according to claim 1, **characterised in that** the lubricant composition and/or the coating formed therefrom have/has a content of at least one water-soluble, water-containing and/or water-binding oxide and/or silicate as well as a content of at least one ionomer, at least one additional organic polymeric component which cannot be regarded as an ionomer, such as e.g. oligomers, polymers and/or copolymers based on acrylic acid/methacrylic acid, amide, amine, aramid, epoxide, ethylene, imide, polyester, propylene, styrene, urethane, ester(s) thereof and/or salt(s) thereof, and/or a content of at least two waxes as well as, optionally, a content of at least one additive.

3. A process according to claim 1 or 2, **characterised in that** the ionomers substantially consist of ionomeric copolymers optionally together with corresponding ions, monomers, comonomers, oligomers, co-oligomers, polymers, esters thereof and/or salts thereof.

4. A process according to one of the preceding claims, **characterised in that** the lubricant composition and/or the coating formed therefrom have/has a content of at least one additional organic polymeric component which cannot be regarded as an ionomer in the range from 0.1 to 90 wt.% of the solids and active substances.

5. A process according to one of the preceding claims, **characterised in that** at least one ionomer and/or at least one additional organic polymeric component which cannot be regarded as an ionomer are/is at least partly neutralised, are/is at least partly saponified and/or are/is at least partly present in the lubricant composition and/or in the coating as at least one organic salt.

6. A process according to one of the preceding claims, **characterised in that**, in each case, at least one primary, secondary and/or tertiary amine, ammonia and/or at least one hydroxide, especially at least one amino alcohol, is used as the neutralising agent for the neutralisation of the lubricant composition.

7. A process according to one of the preceding claims, **characterised in that** the lubricant composition and/or the coating formed therefrom contain(s) at least two waxes, especially in each case at least one paraffin wax, carnauba wax, silicone wax, amide wax, ethylene- and/or propylene-based wax and/or crystalline wax.

8. A process according to one of the preceding claims, **characterised in that**, in the lubricant compositions and/or the coatings formed therefrom, waxes are used whose viscosities at a specific elevated or high temperature in the range of the surface temperatures of the workpiece to be formed during cold forming differ by at least 5% in their viscosity.

9. A process according to one of the preceding claims, **characterised in that** the lubricant compositions and/or the coatings formed therefrom contain at least two types of organic polymeric substances, selected from ionomers and additional organic polymeric components that cannot be regarded as ionomers, which, over the temperature range from 40 to 260 °C, have a total of at least two ranges and/or peaks of softening and/or melting, at least two of which are at least 30 °C apart.

10. A process according to one of the preceding claims, **characterised in that** the coating formed from the lubricant composition has several consecutive softening ranges/softening points and/or melting ranges/melting points over a relatively large temperature range, which is passed through when the metallic workpiece heats up as a result of the cold forming, with which there is a substantially continuous change or an approximately graduated change in the thermal and/or mechanical properties and/or the viscosity of the coatings during cold forming.

11. A process according to one of the preceding claims, **characterised in that** the coatings formed from the lubricant compositions with a content of at least two waxes have in each case at least one range and/or peak of melting over the temperature range from 40 to 129 °C and from 130 to 260 °C.

12. A process according to one of the preceding claims, **characterised in that** the lubricant composition and/or the coating formed therefrom contain(s) at least one additive selected from the group consisting of solid lubricants, friction reducers, wear-protection additives, silane additives, elastomers, film-forming auxiliaries, anti-corrosion agents, surfactants, defoamers, flow promoters, biocides, thickeners and organic solvents.

13. A process according to one of the preceding claims, **characterised in that** the formed workpiece is at least partly cleaned of the remaining coating and/or of the deposits of the lubricant composition after cold forming.

14. A process according to one of claims 1 to 12, **characterised in that** the coating remains on the formed workpiece permanently after cold forming, at least in part.

15. A lubricant composition for application to a workpiece to be formed and for cold forming according to one of claims 1 to 14.

16. A coating which is/was formed from a lubricant composition according to claim 15.

17. The use of a lubricant composition according to claim 15 for application to a workpiece to be formed and for cold forming.

## Revendications

1. Procédé de préparation de pièces métalliques en vue du formage à froid, par application d'une couche de lubrifiant qui est désignée ci-après également comme revêtement, soit sur une surface métallique soit sur une surface métallique préenduite, **caractérisé en ce que** la couche de lubrifiant est réalisée par mise en contact de la surface avec une composition de lubrifiant aqueuse,
qui présente une teneur totale en au moins deux cires comprise dans la plage allant de 5 à 60 % en poids des matières solides et des agents actifs,
**en ce que** le revêtement formé à partir de la composition de lubrifiant présente, sur une plage de températures relativement grande qui est parcourue par le formage à froid lors du chauffage de la pièce métallique, plusieurs plages de ramollissement/points de ramollissement ou/et plages de fusion/points de fusion successives/successifs, de sorte qu'il en résulte une modification sensiblement continue ou une modification approximativement graduée des propriétés thermiques ou/et mécaniques ou/et de la viscosité des revêtements lors du formage à froid, au moins une cire à bas point de fusion avec au moins une cire à point de fusion élevé étant contenues dans la composition de lubrifiant ou/et dans le revêtement formé à partir de celle-ci, dont les plages de fusion/points de fusion Tₘ sont espacé(e)s d'au moins 30 °C, et les revêtements formés à partir des compositions de lubrifiant, avec une teneur en au moins deux cires, présentent sur la plage de températures de 40 à 260 °C au total au moins deux plages ou/et pics de fusion, dont au moins deux sont espacés d'au moins 30 °C, et
**en ce que** la composition de lubrifiant aqueuse présente en outre une teneur en matériau polymère organique à base d'un ionomère, acide acrylique/méthacrylique, époxyde, éthylène, polyamide, propylène, styrène, uréthane, leur(s) ester(s) ou/et leur(s) sel(s), ainsi qu'une teneur en oxyde hydrosoluble, contenant de l'eau ou/et rétenteur d'eau, ou/et en silicate choisi respectivement au moins parmi un verre soluble, dans la plage allant de 0,1 à 85 % en poids, la teneur en au moins un ionomère étant comprise dans la plage allant de 5 à 90 % en poids, respectivement par rapport aux matières solides et agents actifs.

2. Procédé selon la revendication 1, **caractérisé en ce que** la composition de lubrifiant ou/et le revêtement formé à partir de celle-ci a/ont une teneur en au moins un oxyde ou/et silicate hydrosoluble, contenant de l'eau ou/et rétenteur d'eau, ainsi qu'une teneur en au moins un ionomère, au moins un autre constituant polymère organique qui n'est pas à considérer comme un ionomère, tel que des oligomères, polymères ou/et copolymères à base d'acide acrylique/méthacrylique, amide, amine, aramide, époxyde, éthylène, imide, polyester, propylène, styrène, uréthane, leur(s) ester(s) ou/et leur(s) sel(s), ou/et une teneur en au moins deux cires ainsi que, le cas échéant, une teneur en au moins un additif.

3. Procédé selon la revendication 1 ou 2, **caractérisé en ce que** les ionomères sont constitués essentiellement de copolymères ionomères, le cas échéant conjointement avec des ions, monomères, comonomères, oligomères, co-oligomères, polymères correspondants, leurs esters ou/et leurs sels.

4. Procédé selon l'une quelconque des revendications précédentes, **caractérisé en ce que** la composition de lubrifiant ou/et le revêtement formé à partir de celle-ci a/ont une teneur en au moins un autre constituant polymère organique qui n'est pas à considérer comme ionomère, dans la plage allant de 0,1 à 90 % en poids des matières solides et agents actifs.

5. Procédé selon l'une quelconque des revendications précédentes, **caractérisé en ce qu'**au moins un ionomère ou/et au moins un autre constituant polymère organique qui n'est pas à considérer comme ionomère, est/sont neutralisé(s) au moins en partie, est/sont saponifié(s) au moins en partie ou/et est/sont présent(s) au moins en partie en tant qu'au moins un sel organique dans la composition de lubrifiant ou/et le revêtement.

6. Procédé selon l'une quelconque des revendications précédentes, **caractérisé en ce que** pour la neutralisation de la composition de lubrifiant on utilise respectivement au moins une amine primaire, secondaire ou/et tertiaire, de l'ammoniac ou/et au moins un hydroxyde en tant qu'agent de neutralisation, en particulier au moins un amino-alcool.

7. Procédé selon l'une quelconque des revendications précédentes, **caractérisé en ce que** la composition de lubrifiant ou/et le revêtement formé à partir de celle-ci contient/contiennent au moins deux cires, en particulier respectivement une cire de paraffine, une cire de carnauba, une cire de silicone, une cire d'amide, une cire à base d'éthylène ou/et de propylène ou/et une cire cristalline.

8. Procédé selon l'une quelconque des revendications précédentes, **caractérisé en ce que** dans les compositions de lubrifiant ou/et les revêtements formés à partir de celles-ci, on utilise des cires dont les viscosités, à une température accrue ou élevée définie dans la plage des températures de surface de la pièce à former, varient d'au moins 5 % dans leur viscosité lors du formage à froid.

9. Procédé selon l'une quelconque des revendications précédentes, **caractérisé en ce que** les compositions de lubrifiant ou/et les revêtements formés à partir de celles-ci contiennent au moins deux types de substances polymères organiques, sélectionnées parmi les ionomères et d'autres constituants polymères organiques qui ne sont pas à considérer comme ionomères, qui présentent sur la plage de températures allant de 40 à 260 °C au moins deux plages et/ou pics de ramollissement ou/et de fusion, dont au moins deux sont espacés d'au moins 30 °C.

10. Procédé selon l'une quelconque des revendications précédentes, **caractérisé en ce que** le revêtement formé à partir de la composition de lubrifiant présente, sur une plage de températures relativement grande qui est parcourue par le formage à froid lors du chauffage de la pièce métallique, plusieurs plages de ramollissement/points de ramollissement ou/et plages de fusion/points de fusion successives/successifs, dont il résulte une modification sensiblement continue ou une modification approximativement graduée des propriétés thermiques ou/et mécaniques ou/et de la viscosité des revêtements lors du formage à froid.

11. Procédé selon l'une quelconque des revendications précédentes, **caractérisé en ce que** les revêtements formés à partir des compositions de lubrifiant, avec une teneur en au moins deux cires, présentent sur la plage de températures allant de 40 à 128 °C et de 130 à 260 °C respectivement au moins une plage ou/et un pic de fusion.

12. Procédé selon l'une quelconque des revendications précédentes, **caractérisé en ce que** la composition de lubrifiant ou/et le revêtement formé à partir de celle-ci contient/contiennent au moins un additif sélectionné dans le groupe comprenant des lubrifiants solides, des réducteurs de coefficient de frottement, des additifs protégeant contre l'usure, des additifs à base de silane, des élastomères, des auxiliaires filmogènes, des agents anticorrosifs, des agents tensioactifs, des agents antimoussants, des agents d'écoulement, des biocides, des épaississants et des solvants organiques.

13. Procédé selon l'une quelconque des revendications précédentes, **caractérisé en ce que**, après le formage à froid, la pièce formée est nettoyée pour être débarrassée au moins en partie du revêtement restant ou/et des dépôts de la composition de lubrifiant.

14. Procédé selon l'une quelconque des revendications 1 à 12, **caractérisé en ce que**, après le formage à froid, le revêtement reste au moins en partie de façon durable sur la pièce formée.

15. Composition de lubrifiant pour l'application sur une pièce à former et pour le formage à froid selon l'une des revendications 1 à 14.

16. Revêtement qui est/a été formé à partir d'une composition de lubrifiant selon la revendication 15.

17. Utilisation d'une composition de lubrifiant selon la revendication 15 pour l'application sur une pièce à former et pour le formage à froid.
